# EUROPÄISCHE PATENTSCHRIFT

(11) **EP 3 763 985 B1**
(45) Veröffentlichungstag und Bekanntmachung des Hinweises auf die Patenterteilung: **24.05.2023**
(21) Anmeldenummer: 19184962.9
(22) Anmeldetag: 08.07.2019
(51) Int. Cl.: F16L 37/35, F16L 37/42, F16L 37/23

(54) **KUPPLUNGSSYSTEM FÜR SCHLAUCH- UND/ODER ROHRLEITUNGEN SOWIE VERFAHREN ZUM HERSTELLEN UND SPERREN EINES FLUIDISCHEN DURCHFLUSSES**
COUPLING SYSTEM FOR HOSE AND / OR PIPE LINES AND METHOD FOR PRODUCING AND BLOCKING A FLUID FLOW
SYSTÈME D'ACCOUPLEMENT POUR TUYAUTERIES ET / OU CONDUITES AINSI QUE PROCÉDÉ DE FABRICATION ET D'ARRÊT D'UN ÉCOULEMENT DE FLUIDE

(43) Veröffentlichungstag der Anmeldung: 13.01.2021
(73) Patentinhaber: Lüdecke GmbH, 92224 Amberg (DE)
(72) Erfinder: MEIER, Ringo, 92224 Amberg (DE)
(74) Vertreter: Benninger, Johannes

(56) Entgegenhaltungen:
- US-A- 2 850 297

## Beschreibung

Die vorliegende Erfindung betrifft ein Kupplungssystem für Schlauch- und/oder Rohrleitungen und ein Verfahren zum Herstellen und Sperren eines fluidischen Durchflusses.

Sollen Schlauch- und Rohrleitungen, wie sie beispielsweise im Bereich der Pneumatik Verwendung finden, miteinander verbunden werden, so sind hierzu aus dem Stand der Technik Schnellverschlusssysteme bekannt, die sich aus einer Kupplung und einem Nippel zusammensetzen. Die Rohr- und Schlauchleitungen können an die Kupplung angesteckt werden, wobei die Kupplung hierzu einen Befestigungsansatz und einen Steckerteil besitzen kann, auf welche die entsprechenden Rohr- und Schlauchleitungen aufgesteckt werden. Um den Nippel von der Kupplung lösen zu können, existieren entsprechende Verriegelungshülsen, die relativ zur Kupplung axial verschoben werden können, wobei die Verbindung zwischen Kupplung und Nippel aufgehoben wird.

Eine derartige Kupplung ist beispielsweise aus dem Gebrauchsmuster DE 20 2007 006 090 U1 bekannt. Die Kupplung des DE-Gebrauchsmusters besitzt einen Kupplungsteil sowie eine Verriegelungshülse. Weiter ist ein Rastelement vorhanden, mittels dessen ein Stecker an dem Kupplungsteil fixiert werden kann. Durch eine Bewegung der Verriegelungshülse wird die Rastverbindung gelöst, wobei der Stecker durch Federkraft beaufschlagt automatisch vom Kupplungsteil weggeführt wird. Um ein unbeabsichtigtes Lösen des Steckers vom Kupplungsteil zu vermeiden, kann die Verriegelungshülse in eine stabile Drehposition gebracht werden. Das Kupplungsteil gemäß dem DE-Gebrauchsmuster kann hierbei mit einer ersten Schlauch- und/oder Rohrleitung verbunden werden. Der Stecker kann mit einer zweiten Schlauch- und/oder Rohrleitung verbunden werden. Sind das Kupplungsteil und der Stecker aneinander fixiert, so kann ein Fluid bzw. Flüssigkeit oder Luft von der ersten Schlauch- und/oder Rohrleitung über die Kupplung an die zweite Schlauch- und/oder Rohrleitung weitergegeben werden.

Die Praxis hat gezeigt, dass bei einem Trennen des Steckers vom Kupplungsteil ungewollt Medium austreten kann. Dies kann dann der Fall sein, wenn sich in einer Schlauch- und/oder Rohrleitung, welche mit dem Stecker in Verbindung steht, noch Medium befindet.

Wird über die Kupplung Druckluft weitergegeben, so kann es sein, dass ein in einer Schlauch- und/oder Rohrleitung herrschender Überdruck unmittelbar bei Trennen des Steckers vom Kupplungsteil abgebaut wird. Hiermit kann ein ungewollt hoher Geräuschpegel einhergehen. Weiter kann es sein, dass bei Abbau des Überdrucks ein Rückstoß erfolgt, so dass das Trennen des Steckers vom Kupplungsteil umständlich ist ober bei einem unerwarteten Rückstoß sogar zu Verletzungen führen kann.

Die US 2,850,297 A1 offenbart eine Schnellverschlusskupplung mit einem männlichen Teil und einem weiblichen Teil. Der weibliche Teil umfasst mehrere Rastkugeln, die in eine Aussparung des männlichen Teils eingreifen können, um den männlichen Teil am weiblichen Teil lösbar zu befestigen. Durch eine Betätigung einer Hülse kann die Verbindung gelöst werden. Sowohl der männliche Teil als auch der weibliche Teil können bei der Schnellverschlusskupplung jeweils einen Ventilmechanismus umfassen.

Wünschenswert wären Möglichkeiten, mittels welchen bereits bestehende Kupplungssysteme auf einfache Art und Weise derart modifiziert werden können, dass diese nach Modifikation die beschriebenen Probleme nicht aufweisen.

Eine Aufgabe der Erfindung kann aus diesem Grunde darin gesehen werden, bestehende Kupplungssysteme derart zu verbessern, dass hierdurch ein Aufheben einer fluidischen Verbindung einfach, unter geringem Verletzungsrisiko und mit reduziertem Geräuschpegel ermöglicht wird.

Die obige Aufgabe wird mit den Gegenständen gelöst, welche die Merkmale in den unabhängigen Ansprüchen umfassen. Weitere vorteilhafte Ausgestaltungen werden durch die Unteransprüche beschrieben.

Die Erfindung betrifft ein Kupplungssystem für Schlauch- und/oder Rohrleitungen. Das Kupplungssystem umfasst einen Stecknippel und einen Ventilkörper, in welchen der Stecknippel mit einer hiermit einhergehenden lösbaren Fixierung über den Ventilkörper eingesteckt werden kann. Bewährt hat es sich, wenn der Ventilkörper mehrere ggf. durch Rastkugeln ausgebildete Rastelemente umfasst, die bei einer ausgebildeten Fixierung zwischen Stecknippel und Ventilkörper in eine korrespondierende Aussparung und/oder Nut des Stecknippels eingreifen.

Der Ventilkörper umfasst einen ersten Ventilmechanismus, der mittels eines Einsteckens des Stecknippels in den Ventilkörper über den Stecknippel geöffnet wird und bei einem Trennen des Stecknippels vom Ventilkörper selbständig schließt. Der erste Ventilmechanismus kann zumindest bereichsweise und vorzugsweise vollständig innerhalb eines Gehäuses des Ventilkörpers angeordnet bzw. positioniert sein. Weiter kann der erste Ventilmechanismus eine Ventilhülse umfassen, welche einen O-Ring trägt. Hierbei kann es sein, dass der O-Ring bei geschlossenem ersten Ventilmechanismus an einer Innenmantelfläche eines als Bestandteil des Ventilkörpers ausgebildeten Gehäuses dichtend anliegt und hierbei einen Durchfluss von Fluid durch den Ventilkörper blockiert. Die Ventilhülse kann zudem einen Durchbruch besitzen, durch welchen ein Fluidstrom bei geöffnetem ersten Ventilmechanismus hindurchtreten kann. Es kann somit sein, dass der als Bestandteil des ersten Ventilmechanismus ausgebildete Ventilhülse relativ zu einem Gehäuse des Ventilkörpers bewegt werden kann, wobei bei einer ersten Relativposition Fluid den Ventilkörper durchströmen kann und bei einer zweiten Relativposition ein Durchfluss für Fluid durch den Ventilkörper gesperrt ist.

Auch kann es sein, dass der erste Ventilmechanismus eine Feder umfasst, welche mit der Ventilhülse zusammenwirkt, um den von der Ventilhülse getragenen O-Ring bei geschlossenem ersten Ventilmechanismus bzw. in der zweiten Relativposition kraftbeaufschlagt an der Innenmantelfläche des Gehäuses festzulegen.

Das Kupplungssystem kann als Schnellverschlusskupplung bzw. Sicherheitskupplung für Schlauch- und/oder Rohrleitungen ausgebildet sein. Weiter kann der Ventilkörper ein Gehäuse sowie eine Verriegelungshülse umfassen, welche am Gehäuse angeordnet ist. Die Verriegelungshülse kann ggf. relativ zum Gehäuse in axialer Richtung bewegbar ausgebildet sein, wobei über eine Bewegung der Verriegelungshülse in axialer Richtung und relativ zum Gehäuse eine bis dahin zwischen dem Ventilkörper und dem eingesteckten Stecknippel bestehende lösbare Fixierung aufgehoben wird. Ergänzend hierzu kann in diversen Ausführungsformen vorgesehen sein, dass das Kupplungssystem eine Feder umfasst, wobei die Verriegelungshülse zum Aufheben der bis dahin zwischen dem Ventilkörper und dem eingesteckten Stecknippel bestehenden lösbaren Fixierung relativ zum Gehäuse und entgegen einer Rückstellkraft der Feder in axialer Richtung bewegbar ist. Über die Feder kann die Verriegelungshülse nach Aufheben der bis dahin zwischen dem Ventilkörper und dem eingesteckten Stecknippel bestehenden lösbaren Fixierung ggf. selbständig, relativ zum Gehäuse und in axialer Richtung in eine Ausgangslage zurückbewegt werden. Das Gehäuse kann zumindest abschnittsweise von der Verriegelungshülse aufgenommen bzw. innerhalb der Verriegelungshülse angeordnet sein. Somit kann es sein, dass der vorherig beschriebene erste Ventilmechanismus des Ventilkörpers zumindest anteilig und vorzugsweise vollständig vom Gehäuse aufgenommen ist, wobei das Gehäuse zumindest abschnittsweise von der Verriegelungshülse aufgenommen ist.

Es ist vorgesehen, dass der Stecknippel einen zweiten Ventilmechanismus umfasst. Weiter umfasst das Kupplungssystem mindestens einen Einsatz, welcher entnehmbar in einer durch den Ventilkörper ausgebildeten Aufnahme angeordnet werden kann und entnehmbar in der durch den Ventilkörper ausgebildeten Aufnahme bei Einstecken des Stecknippels in den Ventilkörper zum selbständigen Öffnen des zweiten Ventilmechanismus ausgebildet ist, welcher zweite Ventilmechanismus Bestandteil des Stecknippels ist.

Der zweite Ventilmechanismus kann derart ausgebildet sein, dass der zweite Ventilmechanismus bei einem Trennen des Stecknippels vom Ventilkörper selbständig schließt. Bewährt haben sich hierbei Ausführungsformen, bei welchen der erste Ventilmechanismus des Ventilkörpers und der zweite Ventilmechanismus des Stecknippels bei Einstecken des Stecknippels in den Ventilkörper zumindest näherungsweise zeitgleich bzw. zeitsynchron öffnen und/oder bei welchen der erste Ventilmechanismus und der zweite Ventilmechanismus bei Trennen des Stecknippels vom Ventilkörper zumindest näherungsweise zeitgleich bzw. zeitsynchron schließen. Der zweite Ventilmechanismus kann als fester Bestandteil des Stecknippels ausgebildet sein, so dass der zweite Ventilmechanismus bei Trennen des Stecknippels vom Ventilkörper zusammen mit dem Stecknippel vom Ventilkörper getrennt wird.

Der zweite Ventilmechanismus des Stecknippels kann ein Verschlussteil und eine an das Verschlussteil mechanisch gekoppelte Feder umfassen. Es ist denkbar, dass das Verschlussteil mittels eines Einsteckens des Stecknippels vom mindestens einen Einsatz, welcher entnehmbar in der durch den Ventilkörper ausgebildeten Aufnahme angeordnet ist, gegen eine Rückstellkraft der Feder in eine geöffnete Position überführbar ist und bei einem Trennen des Stecknippels vom Ventilkörper über die Rückstellkraft der Feder selbständig in eine geschlossene Position überführbar ist.

Dem Verschlussteil kann ein O-Ring zugeordnet sein, welcher O-Ring das Verschlussteil in der geschlossenen Position gegenüber einer Innenmantelfläche des Stecknippels fluidisch abdichtet. Insbesondere kann das Verschlussteil eine um die Längsachse des Verschlussteils radial geführte Nut ausbilden, in welcher der O-Ring angeordnet ist. Mittels der Feder kann der O-Ring in der geschlossenen Position ggf. kraftbeaufschlagt mit einer Innenmantelfläche des Stecknippels in Anlage gebracht sein.

Der Stecknippel kann ein Gehäuse umfassen, wobei der zweite Ventilmechanismus zumindest anteilig und vorzugsweise vollständig vom Gehäuse des Stecknippels aufgenommen ist.

Ein Gehäuse des Ventilkörpers und der mindestens eine Einsatz können als zwei voneinander trennbare Komponenten des Ventilkörpers ausgebildet sein. Weiter sind der erste Ventilmechanismus des Ventilkörpers und der mindestens eine Einsatz als zwei voneinander trennbare Komponenten des Ventilkörpers ausgebildet.

Der Ventilkörper kann ggf. wenigstens ein Fixierungsmittel umfassen, welches wenigstens eine Fixierungsmittel lösbar in einen durch den Ventilkörper ausgebildeten Sitz eingebracht werden kann und mit dem mindestens einen Einsatz derart zusammenwirkt, dass der mindestens eine Einsatz über das wenigstens eine Fixierungsmittel in der über den Ventilkörper ausgebildeten Aufnahme gehalten wird, wenn das wenigstens eine Fixierungsmittel in den durch den Ventilkörper ausgebildeten Sitz eingebracht ist. Weiter kann der mindestens eine Einsatz ggf. aus der über den Ventilkörper ausgebildeten Aufnahme entnommen werden, wenn das wenigstens eine Fixierungsmittel aus dem durch den Ventilkörper ausgebildeten Sitz entfernt ist. Somit können ein Gehäuse des Ventilkörpers und das wenigstens eine Fixierungsmittel als zwei voneinander trennbare Komponenten ausgebildet sein. Weiter können der erste Ventilmechanismus des Ventilkörpers und das wenigstens eine Fixierungsmittel als zwei voneinander trennbare Komponenten des Kupplungssystems ausgebildet sein.

Bewährt haben sich Ausführungsformen, bei welchen der erste Ventilmechanismus eine Ventilhülse umfasst, welche zum Öffnen und Schließen des ersten Ventilmechanismus relativ zu einem Gehäuse des Ventilkörpers bewegt werden kann. Hierbei ist vorstellbar, dass die Aufnahme sowie der Sitz durch die Ventilhülse derart ausgebildet werden, dass das wenigstens eine lösbar in den Sitz eingebrachte Fixierungsmittel, welches durch wenigstens einen O-Ring ausgebildet ist, den in der Aufnahme der Ventilhülse gehaltenen mindestens einen Einsatz gegenüber einer Innenmantelfläche der Ventilhülse fluidisch abdichtet.

Die Ventilhülse kann einen Verschluss tragen, welcher in einer ersten zwischen dem Gehäuse und der Ventilhülse ausgebildeten Relativposition schließt und in einer zweiten zwischen dem Gehäuse und der Ventilhülse ausgebildeten Relativposition geöffnet ist bzw. einen fluidischen Durchfluss durch den Ventilkörper freigibt. Der Verschluss kann einen O-Ring tragen, welcher bei geschlossenem ersten Ventilmechanismus mit einer Innenmantelfläche des Gehäuses in Anlage steht und bei geöffnetem ersten Ventilmechanismus gegenüber der Innenmantelfläche des Gehäuses beabstandet ist. Der vorherig erwähnte Sitz und/oder die vorherig erwähnte Aufnahme kann, wie vorhergehend bereits erwähnt, ggf. über die Ventilhülse bereitgestellt werden. Somit kann der mindestens eine Einsatz ggf. in einer über die Ventilhülse bereitgestellte Aufnahme entnehmbar angeordnet sein. Alternativ oder ergänzend hierzu kann das wenigstens eine Fixierungsmittel ggf. in einen durch die Ventilhülse ausgebildeten Sitz lösbar eingebracht sein.

Weiter kann der mindestens eine entnehmbar in der durch den Ventilkörper bzw. die Ventilhülse ausgebildeten Aufnahme angeordnete Einsatz einen vorzugsweise als Stift ausgebildeten Vorsprung umfassen, welcher mittels eines Einsteckens des Stecknippels mit dem Verschlussteil in Oberflächenkontakt treten und das Verschlussteil unter Oberflächenkontakt kraftbeaufschlagt gegen die Rückstellkraft der Feder in die geöffnete Position überführen kann. Ist der mindestens eine Einsatz in der Aufnahme des Ventilkörpers angeordnet, so kann es sein, dass sich der vorzugsweise als Stift ausgebildete Vorsprung parallel zu einer Längsachse des Ventilkörpers erstreckt bzw. dass der vorzugsweise als Stift ausgebildete Vorsprung parallel zu einer Längsachse des Ventilkörpers orientiert ist. Denkbar ist auch, dass ein als Bestandteil des Ventilkörpers ausgebildetes Gehäuse und/oder die vorherig bereits erwähnte Ventilhülse und/oder der vorzugsweise als Stift ausgebildete Vorsprung koaxial zueinander orientiert sind, sofern der mindestens eine Einsatz in der Aufnahme angeordnet ist.

Darüber hinaus kann es sein, dass ein freies bzw. in Richtung des eingesteckten Stecknippels weisendes Ende des vorzugsweise als Stift ausgebildeten Vorsprungs spitz zuläuft. Ein Verschlussteil des Stecknippels kann eine hierzu korrespondierend ausgebildete Einkerbung besitzen, in welcher der vorzugsweise als Stift ausgebildete Vorsprung zum Öffnen des zweiten Ventilmechanismus eintaucht.

Vorstellbar ist, dass das Kupplungssystem einen weiteren Stecknippel umfasst, wobei der weitere Stecknippel anstelle des Stecknippels mit einer hiermit einhergehenden lösbaren Fixierung in den Ventilkörper einsteckbar ist. Hierbei kann vorgesehen sein, dass der weitere Stecknippel zum Öffnen des ersten Ventilmechanismus mittels eines Einsteckens des weiteren Stecknippels in den Ventilkörper ausgebildet ist. Zudem kann es sein, dass der weitere Stecknippel eine sich durch den weiteren Stecknippel erstreckende freie Durchgangsbohrung besitzt, welche sowohl bei einer zwischen dem Ventilkörper und dem weiteren Stecknippel ausgebildeten lösbaren Fixierung als auch bei vom Ventilkörper getrenntem weiteren Stecknippel jeweils geöffnet ist. Somit kann der weitere Stecknippel ggf. keinen Ventilmechanismus besitzen bzw. ohne Ventilmechanismus ausgebildet sein. Solche Systeme zeichnen sich durch eine hohe Flexibilität aus, so dass in Abhängigkeit der jeweiligen fluidischen Koppelung wahlweise der bereits beschriebene Stecknippel, welcher den zweiten Ventilmechanismus besitzt, oder der weitere Stecknippel, welcher die freie Durchgangsbohrung besitzt bzw. ohne Ventilmechanismus ausgebildet ist, in den Ventilkörper eingesteckt werden kann.

Der mindestens eine Einsatz kann wenigstens eine Bohrung besitzen, durch welche Fluid hindurchströmen kann, sofern der erste und zweite Ventilmechanismus jeweils geöffnet sind bzw. sofern der Stecknippel in den Ventilkörper eingesteckt ist.

Die Erfindung betrifft zudem ein Verfahren zum Herstellen und Sperren eines fluidischen Durchflusses. Es kann sein, dass das vorhergehend bereits beschriebene Kupplungssystem zur Umsetzung der Ausführungsformen des nachfolgend beschriebenen Verfahrens ausgebildet bzw. hierzu vorbereitet ist. Merkmale, welche vorhergehend zu diversen Ausführungsformen des Kupplungssystems beschrieben wurden, können ebenso bei diversen Ausführungsformen des nachfolgend beschriebenen Verfahrens vorgesehen sein und werden nicht mehrfach erwähnt. Ebenso können nachfolgend zu diversen Ausführungsformen des Verfahrens beschriebene Merkmale ggf. bei Ausführungsformen des vorhergehend beschriebenen Kupplungssystems Verwendung finden.

Das Verfahren umfasst folgende Schritte:
- Einstecken eines Stecknippels in einen Ventilkörper, wobei mittels des Einsteckens
   a) der Stecknippel lösbar am Ventilkörper festgesetzt wird und
   b) ein als Bestandteil des Ventilkörpers ausgebildeter erster Ventilmechanismus über den Stecknippel geöffnet wird und
- Trennen des bis dahin lösbar am Ventilkörpers festgesetzten Stecknippels vom Ventilkörper, wobei über das Trennen des Stecknippels vom Ventilkörper der erste Ventilmechanismus selbständig schließt.

Es ist zudem vorgesehen, dass zeitlich vor Einstecken des Stecknippels in den Ventilkörper mindestens ein Einsatz in eine durch den Ventilkörper ausgebildete Aufnahme eingesetzt wird, welcher mindestens eine Einsatz eingesetzt in die durch den Ventilkörper ausgebildete Aufnahme mittels des Einsteckens des Stecknippels in den Ventilkörper einen als Bestandteil des Stecknippels ausgebildeten zweiten Ventilmechanismus selbständig öffnet.

Der zweite Ventilmechanismus kann eine Feder und ein Verschlussteil umfassen. Es kann hierbei sein, dass mittels des Einsteckens des Stecknippels in den Ventilkörper das Verschlussteil mit dem in die Aufnahme eingesetzten mindestens einen Einsatz in Oberflächenkontakt tritt und unter Oberflächenkontakt mit dem in die Aufnahme eingesetzten mindestens einen Einsatz gegen eine Rückstellkraft der Feder in eine geöffnete Position überführt wird, womit einhergehend ein Durchfluss für Fluid durch den Stecknippel freigegeben wird. Weiter kann es sein, dass die Feder bei Trennen des Stecknippels vom Ventilkörper das Verschlussteil in eine geschlossene Position überführt, womit einhergehend ein Durchfluss für Fluid durch den Stecknippel gesperrt wird. Der zweite Ventilmechanismus bzw. das Verschlussteil kann ein vorzugsweise als O-Ring ausgebildetes Dichtmittel umfassen, welches in der geschlossenen Position das Verschlussteil gegenüber einer Innenmantelfläche des Stecknippels fluidisch abdichtet, so dass der Durchfluss für Fluid durch den Stecknippel gesperrt wird. Mit einer Bewegung des Verschlussteils gegen die Rückstellkraft der Feder in die geöffnete Position kann das vorzugsweise als O-Ring ausgebildete Dichtmittel seinen Oberflächenkontakt zur Innenmantelfläche des Stecknippels verlieren.

Weiter kann der mindestens eine Einsatz einen vorzugsweise als Stift ausgebildeten Vorsprung umfassen, welcher bei Einstecken des Stecknippels in den Ventilkörper mit dem Verschlussteil in Oberflächenkontakt tritt und das Verschlussteil unter Oberflächenkontakt kraftbeaufschlagt gegen die Rückstellkraft der Feder in die geöffnete Position überführt.

Der mindestens eine Einsatz kann mindestens eine Bohrung besitzen, durch welche Fluid hindurchtreten kann. In diversen Ausführungsformen kann der mindestens eine Einsatz mehrere Bohrungen besitzen, durch welche Fluid jeweils hindurchtreten kann. Vorstellbar ist hierbei, dass die mehreren Bohrungen um eine durch den vorzugsweise als Stift ausgebildeten Vorsprung verlaufende Achse positioniert sind.

Es kann sein, dass zeitlich nach Öffnen des zweiten Ventilmechanismus über den in die Aufnahme eingesetzten mindestens einen Einsatz der bis dahin lösbar am Ventilkörper festgesetzte Stecknippel vom Ventilkörper getrennt wird und zeitlich hierauf folgend der in die Aufnahme eingesetzte mindestens eine Einsatz aus der Aufnahme entnommen wird. Zeitlich hierauf folgend kann ein weiterer Stecknippel, der eine kontinuierlich geöffnete Durchgangsbohrung besitzt, in den Ventilkörper eingesteckt werden, wobei mittels des Einsteckens der weitere Stecknippel lösbar am Ventilkörper festgesetzt wird und der als Bestandteil des Ventilkörpers ausgebildete erste Ventilmechanismus über den weiteren Stecknippel geöffnet wird.

Bewährt hat es sich, sofern eine Verriegelungshülse betätigt und vorzugsweise hierzu relativ gegenüber einem Gehäuse des Ventilkörpers bewegt wird, womit einhergehend eine bis dahin zwischen dem lösbar am Ventilkörper festgesetzten Stecknippel und dem Ventilkörper ausgebildete Fixierung aufgehoben wird. Es kann vorgesehen sein, dass zeitlich nach Aufheben der bis dahin zwischen dem lösbar am Ventilkörper festgesetzten Stecknippel und dem Ventilkörper ausgebildeten Fixierung der bis dahin lösbar am Ventilkörper festgesetzte Stecknippel vom Ventilkörper getrennt wird. Bewährt haben sich Ausführungsformen, bei welchen mit einer Betätigung und vorzugsweise relativen Bewegung der Verriegelungshülse gegenüber dem Gehäuse einhergehend
a) die bis dahin zwischen dem lösbar am Ventilkörper festgesetzten Stecknippel und dem Ventilkörper ausgebildete Fixierung aufgehoben wird und zudem
b) der bis lösbar am Ventilkörper festgesetzte Stecknippel selbständig bzw. automatisch vom Ventilkörper getrennt wird.

Das selbständige bzw. automatische Trennen des am Ventilkörper lösbar festgesetzten Stecknippels vom Ventilkörpers kann über eine Rückstellkraft einer als Bestandteil des ersten Ventilmechanismus ausgebildeten Feder und/oder über eine Rückstellkraft einer als Bestandteil des zweiten Ventilmechanismus ausgebildeten Feder bewirkt werden. Die als Bestandteil des ersten Ventilmechanismus ausgebildete Feder und die als Bestandteil des zweiten Ventilmechanismus ausgebildete Feder können in denkbaren Ausführungsformen zeitlich überlagert mit dem selbständigen bzw. automatischen Trennen des Stecknippels vom Ventilkörper den ersten Ventilmechanismus und den zweiten Ventilmechanismus schließen.

Es kann sein, dass der mindestens eine Einsatz in die durch den Ventilkörper bereitgestellte Aufnahme eingesetzt wird und zeitlich hierauf folgend wenigstens ein Fixierungsmittel lösbar in einen durch den Ventilkörper ausgebildeten Sitz eingebracht wird, woraus resultierend der mindestens eine in die Aufnahme eingesetzte Einsatz über das wenigstens eine Fixierungsmittel in der Aufnahme gehalten wird. Zeitlich hierauf folgend kann der Stecknippel in den Ventilkörper eingesteckt werden, wobei der zweite Ventilmechanismus über den in die Aufnahme eingesetzten und über das wenigstens eine Fixierungsmittel gehaltenen mindestens einen Einsatz geöffnet wird.

Vorstellbar ist, dass zeitlich nach Öffnen des zweiten Ventilmechanismus über den in die Aufnahme eingesetzten und über das wenigstens eine Fixierungsmittel gehaltenen mindestens einen Einsatz der bis dahin lösbar am Ventilkörper festgesetzte Stecknippel vom Ventilkörper getrennt wird. Zeitlich hierauf folgend kann das wenigstens eine lösbar in den durch den Ventilkörper ausgebildeten Sitz eingebrachte wenigstens eine Fixierungsmittel aus dem Ventilkörper entnommen werden. Zeitlich hierauf folgend kann der in die Aufnahme eingesetzte mindestens eine Einsatz aus der Aufnahme entnommen bzw. vom Ventilkörper getrennt werden. Zeitlich hierauf folgend kann das wenigstens eine Fixierungsmittel erneut lösbar in den Sitz, welcher durch den Ventilkörper ausgebildet wird, eingebracht werden sowie zeitlich hierauf folgend ein weiterer Stecknippel, der eine kontinuierlich geöffnete Durchgangsbohrung besitzt, in den Ventilkörper eingesteckt werden, wobei mittels des Einsteckens der weitere Stecknippel lösbar am Ventilkörper festgesetzt wird und der als Bestandteil des Ventilkörpers ausgebildete erste Ventilmechanismus über den weiteren Stecknippel geöffnet wird.

Das wenigstens eine Fixierungsmittel kann durch wenigstens einen O-Ring ausgebildet sein, welcher eingebracht in den durch den Ventilkörper ausgebildeten Sitz fluidisch dichtend an dem mindestens einen in die Aufnahme eingesetzten Einsatz anliegt. Es haben sich Ausführungsformen bewährt, bei welchen das durch wenigstens einen O-Ring ausgebildete wenigstens eine Fixierungsmittel in einen Sitz eingebracht wird, welchen eine Ventilhülse des ersten Ventilmechanismus ausbildet und eingebracht in den durch die Ventilhülse ausgebildeten Sitz den mindestens einen in die Aufnahme eingesetzten Einsatz gegenüber einer Innenmantelfläche der Ventilhülse fluidisch abdichtet.

Im Folgenden sollen Ausführungsbeispiele die Erfindung und ihre Vorteile anhand der beigefügten Figuren näher erläutern. Die Größenverhältnisse der einzelnen Elemente zueinander in den Figuren entsprechen nicht immer den realen Größenverhältnissen, da einige Formen vereinfacht und andere Formen zur besseren Veranschaulichung vergrößert im Verhältnis zu anderen Elementen dargestellt sind.

Die Ausführungsformen, Beispiele und Varianten der vorhergehenden Absätze, die Ansprüche oder die folgende Beschreibung und die Figuren, einschließlich ihrer verschiedenen Ansichten oder jeweiligen individuellen Merkmale, können unabhängig voneinander oder in beliebiger Kombination verwendet werden.

Wenn auch im Zusammenhang der Figuren generell von "schematischen" Darstellungen und Ansichten die Rede ist, so ist damit keineswegs gemeint, dass die Figurendarstellungen und deren Beschreibung hinsichtlich der Offenbarung der Erfindung von untergeordneter Bedeutung sein sollen. Der Fachmann ist durchaus in der Lage, aus den schematisch und abstrakt gezeichneten Darstellungen genug an Informationen zu entnehmen, die ihm das Verständnis der Erfindung erleichtern, ohne dass er etwa aus den gezeichneten und möglicherweise nicht exakt maßstabsgerechten Größenverhältnissen in irgendeiner Weise in seinem Verständnis beeinträchtigt wäre. Die Figuren ermöglichen es dem Fachmann als Leser somit, anhand der konkreter erläuterten Umsetzungen des erfindungsgemäßen Verfahrens und der konkreter erläuterten Funktionsweise der erfindungsgemäßen Vorrichtung ein besseres Verständnis für den in den Ansprüchen sowie im allgemeinen Teil der Beschreibung allgemeiner und/oder abstrakter formulierten Erfindungsgedanken abzuleiten.
Figur 1 zeigt einen schematischen Längsschnitt durch eine Ausführungsform eines Ventilkörpers, wie er als Bestandteil in diversen Ausführungsformen eines erfindungsgemäßen Kupplungssystems vorgesehen sein kann;
Figur 2 zeigt eine schematische Perspektivansicht des Ventilkörpers aus dem Ausführungsbeispiel nach Figur 1;
Figur 3 zeigt einen weiteren schematischen Längsschnitt durch die Ausführungsform eines Ventilkörpers aus den Figuren 1 und 2 unter Verdeutlichung weiterer Aspekte;
Figur 4 zeigt eine Perspektivansicht der Ausführungsform eines Ventilkörpers gemäß dem in Figur 3 dargestellten Längsschnitt;
Figur 5 zeigt einen schematischen Längsschnitt durch eine Ausführungsform eines Stecknippels, wie er als Bestandteil in diversen Ausführungsformen eines erfindungsgemäßen Kupplungssystems vorgesehen sein kann;
Figur 6 zeigt eine schematische Perspektivansicht des Stecknippels aus dem Ausführungsbeispiel nach Figur 5;
Figur 7 zeigt einen schematischen Längsschnitt durch eine Ausführungsform eines weiteren Stecknippels, wie er als Bestandteil in diversen Ausführungsformen eines Kupplungssystems vorgesehen sein kann;
Figur 8 zeigt einen schematischen Längsschnitt durch eine Ausführungsform eines Kupplungssystems, wobei der Stecknippel in Figur 8 vom Ventilkörper getrennt ist;
Figur 9 zeigt eine schematische Perspektivansicht der Ausführungsform eines Kupplungssystems nach Figur 8, wobei der Stecknippel vom Ventilkörper getrennt ist;
Figur 10 zeigt einen schematischen Längsschnitt durch die Ausführungsform eines Kupplungssystems nach Figuren 8 und 9, wobei der Stecknippel in Figur 9 in den Ventilkörper eingesteckt ist;
Figur 11 zeigt eine schematische Perspektivansicht der Ausführungsform eines Kupplungssystems nach Figuren 8 bis 10, wobei der Stecknippel in den Ventilkörper eingesteckt ist;
Figur 12 zeigt im Flussdiagramm einzelne Schritte, wie sie bei diversen Ausführungsformen des erfindungsgemäßen Verfahrens einzeln oder in der gemäß Figur 12 dargestellten Kombination vorgesehen sein können.

Für gleiche oder gleich wirkende Elemente der Erfindung werden identische Bezugszeichen verwendet. Ferner werden der Übersicht halber nur Bezugszeichen in den einzelnen Figuren dargestellt, die für die Beschreibung der jeweiligen Figur erforderlich sind. Die dargestellten Ausführungsformen stellen lediglich Beispiele dar, wie die Erfindung ausgestaltet sein kann und stellen keine abschließende Begrenzung dar.

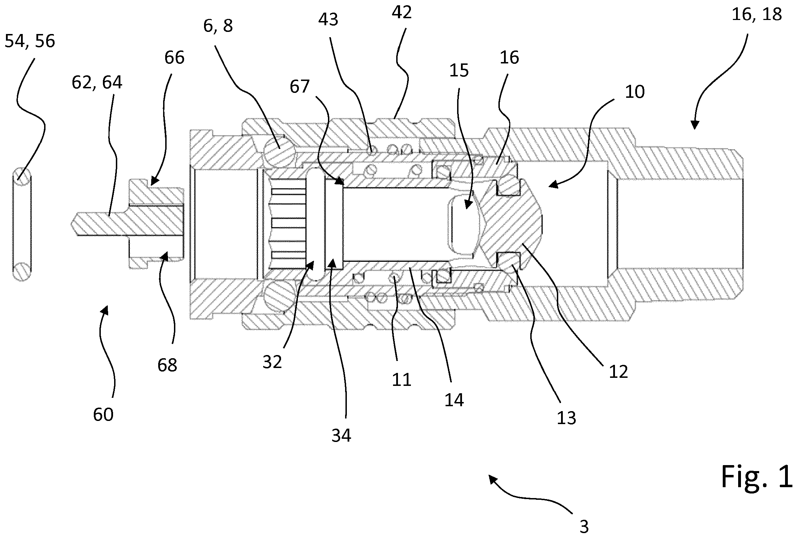

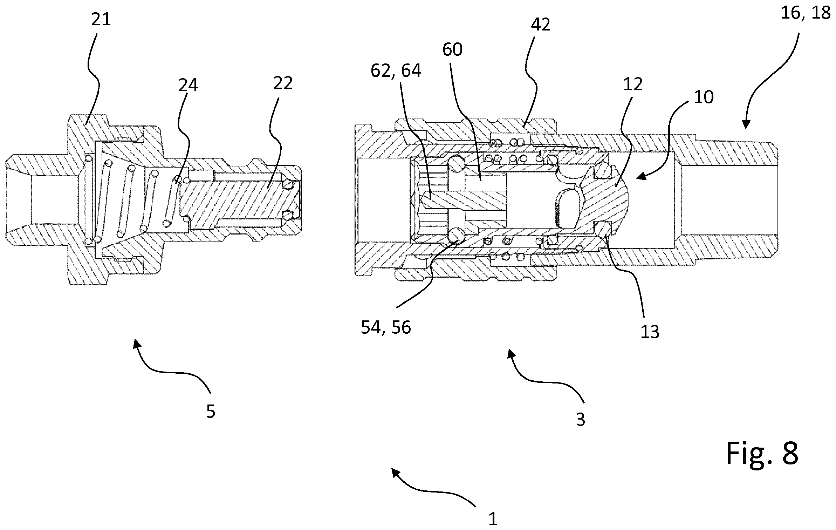

Figur 1 zeigt einen schematischen Längsschnitt durch eine Ausführungsform eines Ventilkörpers 3, wie er als Bestandteil in diversen Ausführungsformen eines erfindungsgemäßen Kupplungssystems 1 (vgl. Figur 8) vorgesehen sein kann.

Der Ventilkörper 3 umfasst ein Gehäuse 16, an welchem eine Verriegelungshülse 42 angeordnet ist. Das Gehäuse 16 und die Verriegelungshülse 42 können relativ zueinander in axialer Richtung bewegt werden. Hierdurch kann eine nachfolgend noch beschriebene und zwischen einem Stecknippel 5 und dem Ventilkörper 3 ausgebildete Verriegelung aufgehoben werden, wobei ein Eingriff zwischen den durch Rastkugeln 8 ausgebildeten Rastelementen 6 und dem Stecknippel 5 aufgehoben wird und der Stecknippel 5 vom Ventilkörper 3 getrennt werden kann. Das Gehäuse 16 und die Verriegelungshülse 42 stehen weiter über eine Feder 43 miteinander in Verbindung, welche die Verriegelungshülse 42 zeitlich nach Trennen des Stecknippels 5 vom Ventilkörper 3 in eine Ausgangslage zurückbewegen kann.

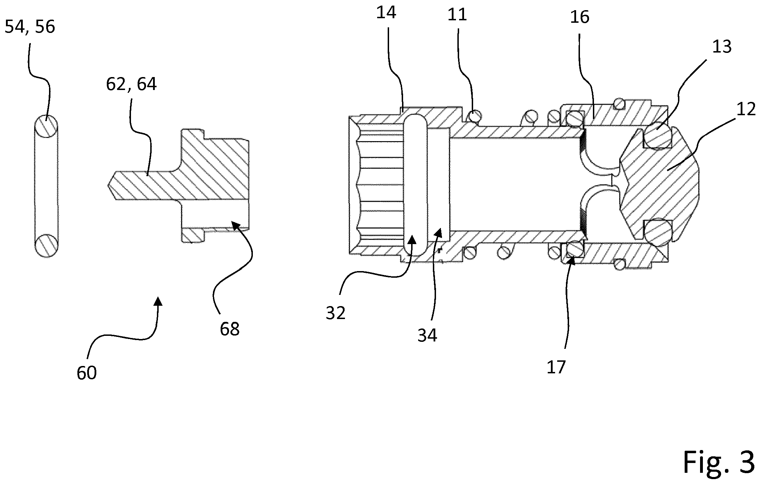

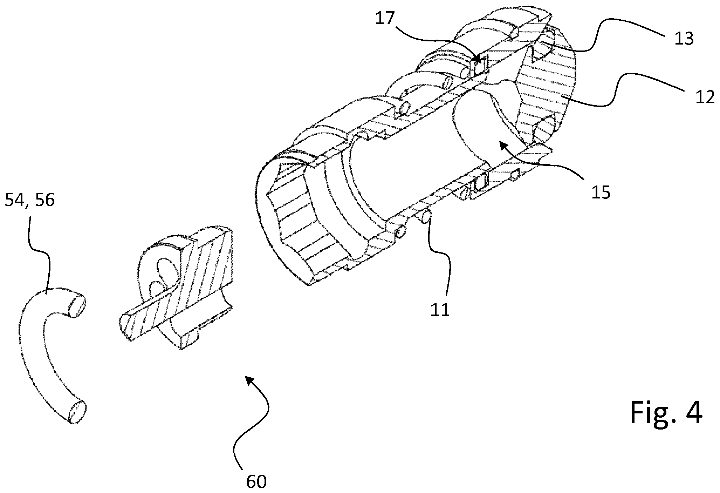

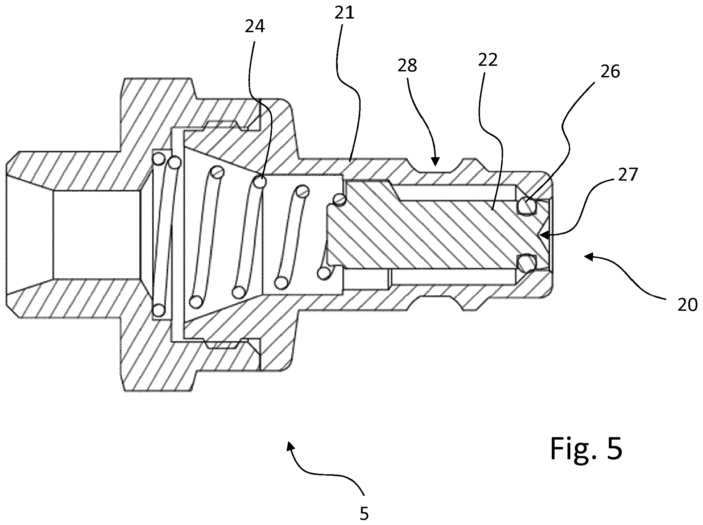

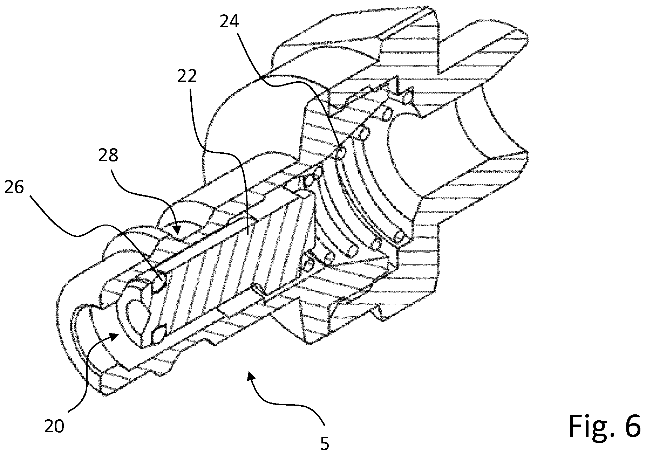

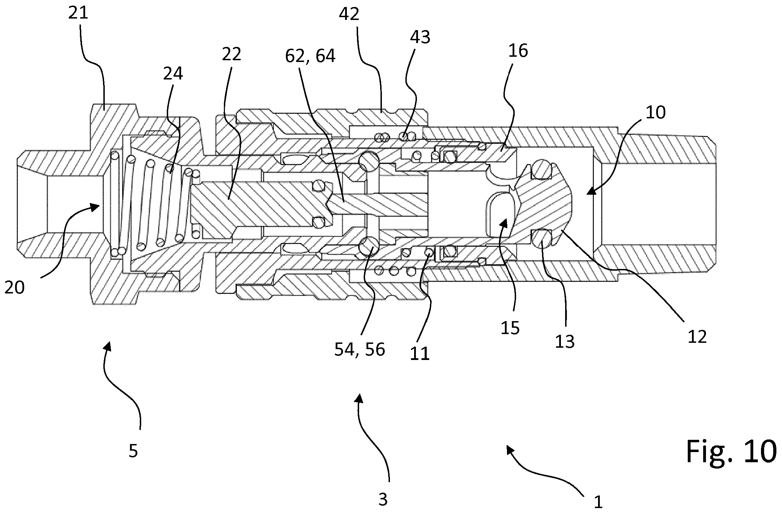

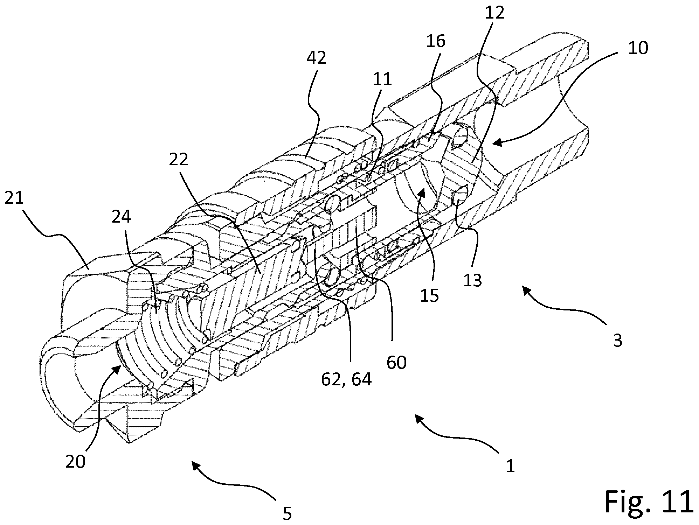

An das als Bestandteil des Gehäuses 16 ausgebildete Anschlussstück 18 ist in der Praxis eine pneumatische Leitungsverbindung gekoppelt. Ist der Stecknippel 5 (vgl. Figuren 5 und 6) vom Ventilkörper 3 getrennt, so schließt ein innerhalb des Gehäuses 16 angeordneter erster Ventilmechanismus 10, um einen ungewollten Austritt von Fluid aus dem Ventilkörper 3 zu verhindern. Bestandteil des ersten Ventilmechanismus 10 ist eine in Figur 1 bereits gezeigte Ventilhülse 14, welche ergänzend in Figuren 3 und 4 nochmals detailliert zu erkennen ist. In die Ventilhülse 14 ist ein Durchbruch 15 eingebracht. Um den ersten Ventilmechanismus 10 zu öffnen bzw. einen Durchfluss für Fluid durch den Ventilkörper 3 freizugeben, wird die Ventilhülse 14 bei Einstecken eines Stecknippels 5 in den Ventilkörper 3 über den Stecknippel 5 in Richtung des Anschlussstücks 18 bewegt. Der geöffnete Zustand bzw. eine Position der Ventilhülse 14, bei welcher der Ventilmechanismus 10 geöffnet ist, ist in den Figuren 10 und 11 jeweils zu erkennen. Im geöffneten Zustand kann sich ein Fluidstrom durch den Durchbruch 15 bewegen.

In Figur 1 ist der Ventilmechanismus 10 geschlossen, so dass kein Fluidstrom durch den Durchbruch 15 bewegt wird. Die Ventilhülse 14 trägt einen Verschluss 12 mit einem O-Ring 13, welcher im geschlossenen Zustand am Gehäuse 16 dichtend anliegt und hierdurch den Durchfluss blockiert.

Der erste Ventilmechanismus 10 umfasst zudem eine Feder 11. Wird der erste Ventilmechanismus 10 geöffnet, so bewegt der Stecknippel 5 die Ventilhülse 14 in axialer Richtung und relativ zum Gehäuse 16 gegen die Rückstellkraft der Feder 11 in eine geöffnete Position entsprechend Figuren 10 und 11. Wird der Stecknippel 5 sodann vom Ventilkörper 3 getrennt, so bewegt die Feder 11 die Ventilhülse 14 automatisch in die geschlossene Position nach Figur 1 zurück, so dass ein Durchfluss von Fluid durch den Ventilkörper 3 über den Verschluss 12 gesperrt wird, wobei der O-Ring 13 dichtend am Gehäuse 16 anliegt.

Die Praxis hat gezeigt, dass eine Schlauch- und/oder Rohrleitung, mit welcher ein Stecknippel in Verbindung steht, häufig noch Fluid bzw. einen Restdruck aufweist. Wird der Stecknippel vom Ventilkörper 3 getrennt, so kann sich bei Trennen des Stecknippels vom Ventilkörper 3 der Restdruck unmittelbar abbauen. Hiermit ist ein unerwünscht hoher Lärmpegel verbunden. Da der Restdruck auch zu einem Rückstoß führen kann, besitzen solche aus dem Stand der Technik bekannte Kupplungssysteme ein gewisses Risiko, dass ein Benutzer bei Trennen eines Ventilkörpers vom Stecknippel verletzt wird.

Bei einem Kupplungssystem 1 (vgl. Figuren 8 bis 11), welches ggf. einen Ventilkörper 3 entsprechend Figur 1 umfasst, besitzt der Stecknippel 5 einen nachfolgend noch beschriebenen zweiten Ventilmechanismus 20, welcher einen fluidischen Durchfluss durch den Stecknippel 5 unterbricht, wenn der Stecknippel 5 vom Ventilkörper 3 getrennt wird. Um diesen zweiten Ventilmechanismus 20 bei Einstecken des Stecknippels 5 in den Ventilkörper 3 öffnen zu können, ist ein Einsatz 60 vorgesehen. Um zu gewährleisten, dass im geöffneten Zustand des ersten Ventilmechanismus 10 Fluid den Ventilkörper 3 durchströmen kann bzw. dass der Einsatz 60 einen solchen Durchfluss nicht behindert, sind in den Einsatz 60 mehrere Bohrungen 68 eingebracht, von welchen im Längsschnitt nach Figur 1 eine Bohrung 68 zu erkennen ist. Der Einsatz 60 ist in Figur 1 getrennt vom Ventilkörper 3. Um den Einsatz 60 im Ventilkörper 3 aufzunehmen, umfasst der Ventilkörper 3 eine Aufnahme 34. Die Aufnahme 34 wird vorliegend über den ersten Ventilmechanismus 10 bzw. über die Ventilhülse 14 des ersten Ventilmechanismus 10 bereitgestellt. Durch die Ausbildung des Einsatzes 60 als separate bzw. von der Ventilhülse 14 trennbare Komponente, kann der Einsatz 60 in die Aufnahme 34 eingebracht und zu einem späteren Zeitpunkt aus der Aufnahme 34 wieder entnommen werden. Da die Ventilhülse 14 bei Öffnen des ersten Ventilmechanismus 10 relativ zum Gehäuse 16 bewegt wird und da sich der Einsatz 60 hierbei in der Aufnahme 34 befindet, wird der Einsatz 60 bei Öffnen des ersten Ventilmechanismus 10 zusammen mit der Ventilhülse 14 relativ zum Gehäuse 16 bewegt. Figur 1 zeigt weiter, dass die Ventilhülse 14 einen Anschlag 67 ausbildet. Der Einsatz 60 wird bei Einbringen in die Aufnahme 34 über eine Schulter 66 mit dem Anschlag 67 in Anlage gebracht.

Befindet sich der Einsatz 60 in der Aufnahme 34 bzw. wurde der Einsatz 60 in die Aufnahme 34 eingesetzt, so ist der Einsatz 60 zunächst in axialer Richtung aus der Aufnahme 34 bewegbar. Um den Einsatz 60 zeitlich nach seinem Einsetzen in der Aufnahme 34 zu halten, ist ein als O-Ring 56 ausgebildetes Fixierungsmittel 54 vorgesehen. Das als O-Ring 56 ausgebildete Fixierungsmittel 54 kann in den Sitz 32 eingebracht werden, welcher ebenso über die Ventilhülse 14 des ersten Ventilmechanismus 10 ausgebildet wird. Nach Einsetzen des als O-Ring 56 ausgebildeten Fixierungsmittel 54 ist der Einsatz 60 formschlüssig in der Aufnahme 34 festgesetzt. Aus Figur 1 wird zudem deutlich, dass dem als O-Ring 56 ausgebildeten Fixierungsmittel 54 über das formschlüssige Festsetzen des Einsatzes 60 in der Aufnahme 34 eine weitere Funktion zukommt. So kann das als O-Ring 56 ausgebildete und in den Sitz 32 eingesetzte Fixierungsmittel 54 darüber hinaus den in der Aufnahme 34 angeordneten Einsatz 60 gegenüber der Ventilhülse 14 fluidisch abdichten.

Sofern der Einsatz 60 hierauf folgend vom Ventilkörper 3 getrennt werden soll, muss vorhergehend lediglich das als O-Ring 56 ausgebildete Fixierungsmittel 54 aus dem Sitz 32 entnommen werden, woraufhin der Einsatz 60 in axialer Richtung bewegt werden kann.

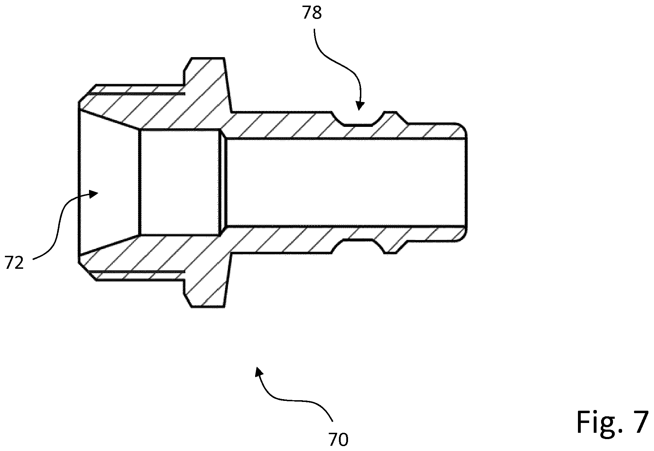

Durch die Trennbarkeit des Einsatzes 60 von der Ventilhülse 14 kann der Ventilkörper 3 auf einfache Art und Weise an jeweilige Arbeitserfordernisse angepasst bzw. hierfür modifiziert werden. So kann es sein, dass für diverse fluidische Koppelungen anstelle des Stecknippels 5, welcher den zweiten Ventilmechanismus 20 aufweist, ein weiterer Stecknippel 70 entsprechend Figur 7 mit dem Ventilkörper 3 verbunden wird. Der weitere Stecknippel 70 besitzt einen einfachen Aufbau ohne einen Ventilmechanismus. Eine freie Durchgangsbohrung 72 (vgl. Figur 7) des weiteren Stecknippels 70 ist durchgehend geöffnet bzw. zu keiner Zeit verschlossen. Soll der weitere Stecknippel 70 anstelle des Stecknippels 5 mit dem Ventilkörper 3 lösbar verbunden werden, so kann vorhergehend zunächst das als O-Ring 56 ausgebildete Fixierungsmittel 54 aus dem Sitz 32 entnommen werden. Hierdurch ist der Einsatz 60 nicht mehr über das Fixierungsmittel 54 in der Aufnahme 34 gehalten, so dass der Einsatz 60 vom Ventilkörper 3 entnommen werden kann und der Ventilkörper 3 hierdurch auf eine lösbare Verbindung mit dem weiteren Stecknippel 70 vorbereitet ist. Auch über den weiteren Stecknippel 70 kann der erste Ventilmechanismus 10 bei Einstecken in den Ventilkörper 3 geöffnet werden. In der Praxis wird das als O-Ring 56 ausgebildete Fixierungsmittel 54 vor Einstecken des weiteren Stecknippels 70 in den Ventilkörper 3 erneut in den Sitz 32 eingebracht, welcher von der Ventilhülse 14 bereitgestellt wird.

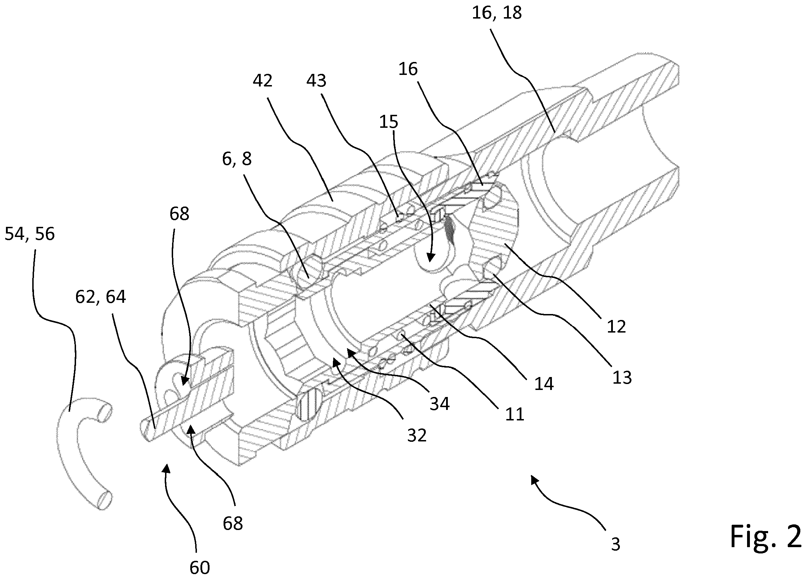

Figur 2 zeigt eine schematische Perspektivansicht des Ventilkörpers 3 aus dem Ausführungsbeispiel nach Figur 1. In der perspektivischen Ansicht nach Figur 2 ist nun gut zu erkennen, dass der Einsatz 60 mehrere Bohrungen 68 besitzt, die um eine sich entlang des als Stift 64 ausgebildeten Vorsprunges 62 verlaufende Längsachse in den Einsatz 60 eingebracht sind und durch welche ein Fluidstrom jeweils hindurchtreten kann. Der Einsatz 60 ist in Figur 2 weiterhin aus der Aufnahme 34 entnommen. Wie vorhergehend bereits erwähnt, kann der Einsatz 60 in die Aufnahme 34 eingebracht werden, woraufhin der Einsatz 60 über das als O-Ring 56 ausgebildete Fixierungsmittel 54 in der Aufnahme 34 formschlüssig festgesetzt wird.

Figur 3 zeigt einen weiteren schematischen Längsschnitt durch die Ausführungsform eines Ventilkörpers 3 aus den Figuren 1 und 2 unter Verdeutlichung weiterer Aspekte. Es wurde bereits erwähnt, dass die Ventilhülse 14 bei Einstecken des Stecknippels 5 in den Ventilkörper 3 in axialer Richtung relativ zum Gehäuse 16 gegen die Rückstellkraft der Feder 11 bewegt wird. Wird der Stecknippel 5 vom Ventilkörper 3 getrennt, so kann die Feder 11 über ihre Rückstellkraft die Ventilhülse 14 in die Ausgangslage zurückbewegen, wobei entsprechend der Darstellung nach Figur 3 der vom Verschluss 12 getragene O-Ring 13 mit dem Ventilgehäuse 16 in Anlage tritt und einen Durchfluss von Fluid durch den Ventilkörper 3 blockiert. In Figur 3 ist diese Anlage des O-Rings 13 am Gehäuse 16 nochmals gut zu erkennen. Darüber hinaus zeigt Figur 3 deutlich, dass ein weiterer O-Ring in einer durch das Gehäuse 16 ausgebildeten Aussparung 17 gehalten wird.

Figur 4 zeigt eine Perspektivansicht der Ausführungsform eines Ventilkörpers 3 gemäß dem in Figur 3 dargestellten Längsschnitt. Die über das Gehäuse 16 ausgebildete Aussparung 17, in welcher ein weiterer O-Ring aufgenommen ist, ist in Figur 4 nochmals zu erkennen. Zudem zeigt Figur 4 nochmals den Durchbruch 15, durch welchen Fluid bei geöffnetem ersten Ventilmechanismus 10 strömen kann.

Figur 5 zeigt einen schematischen Längsschnitt durch eine Ausführungsform eines Stecknippels 5, wie er als Bestandteil in diversen Ausführungsformen eines erfindungsgemäßen Kupplungssystems 1 vorgesehen sein kann. Der Stecknippel 5 umfasst ein Gehäuse 21 sowie einen zweiten Ventilmechanismus 20, welcher im Gehäuse 21 aufgenommen ist. Der zweite Ventilmechanismus 20 besitzt ein Verschlussteil 22, welches einen O-Ring 26 trägt. Über die Feder 24 des zweiten Ventilmechanismus 20 wird das Verschlussteil 22 in axialer Richtung mit Federkraft beaufschlagt, so dass der O-Ring 26 im geschlossenen Zustand des zweiten Ventilmechanismus 20 gemäß Figur 5 an einer Innenmantelfläche des Gehäuses 21 kraftbeaufschlagt anliegt. Der zweite Ventilmechanismus 20 ist somit geschlossen, so dass kein Fluid durch den Stecknippel 5 bzw. durch das Gehäuse 21 des Stecknippels 5 geführt werden kann.

Bei Einstecken des Stecknippels 5 in den Ventilkörper 3 öffnet der zweite Ventilmechanismus 20 selbständig. Hierzu taucht der als Stift 64 ausgebildete Vorsprung 62 (vgl. Figuren 1 bis 4) des in der Aufnahme 34 angeordneten Einsatzes 60 in die Einkerbung 27 des Verschlussteils 22 ein und bewegt sodann das Verschlussteil 22 relativ zum Gehäuse 21 in axialer Richtung gegen die Rückstellkraft der Feder 24. Der O-Ring 26, welcher vom Verschlussteil 22 getragen wird, verliert hierbei seinen Oberflächenkontakt zur Innenmantelfläche des Gehäuses 21, so dass ein Fluidstrom bei geöffnetem zweiten Ventilmechanismus 20 den Stecknippel 5 passieren kann. Das Fluid wird hierbei entlang eines Ringspalts bewegt, welcher sich entlang des Verschlussteils 22 erstreckt. Im Längsschnitt nach Figur 5 ist zudem eine Vertiefung 28 zu erkennen, welche sich radial um eine Längsachse des Stecknippels 5 erstreckt. Sofern der Stecknippel 5 in den Ventilkörper 3 eingesteckt ist, wird der Stecknippel 5 über die Rastkugeln 8 bzw. Rastelemente 6 (vgl. Figuren 1 bis 4) formschlüssig am Ventilkörper 3 gehalten, wobei die Rastkugeln 8 bzw. Rastelemente 6 in der Vertiefung 28 des Stecknippels 5 angeordnet sind. Wird die Verriegelungshülse 42 betätigt bzw. relativ zum Gehäuse 16 in axialer Richtung bewegt, so können die Rastelemente 6 bzw. Rastkugeln 8 in radialer Richtung aus der Vertiefung 28 bewegt werden, so dass der Stecknippel 5 ggf. über die Rückstellkraft der auf Verweis mit Ziffer 11 in Figuren 1 bis 4 dargestellten Feder selbständig vom Ventilkörper 3 getrennt wird.

Figur 6 zeigt eine schematische Perspektivansicht des Stecknippels 5 aus dem Ausführungsbeispiel nach Figur 5. Insbesondere lässt Figur 6 nochmal den vom Verschlussteil 22 im Bereich des freien Endes getragenen O-Ring 26 erkennen. Die Feder 24, welche zum Rückstellen des Verschlussteils 22 die hierfür notwendige Rückstellkraft aufbringen kann, besitzt im Ausführungsbeispiel nach Figur 6 eine Vielzahl an Windungen und ist vollständig vom Gehäuse 21 des Stecknippels 5 aufgenommen. Auch der Verlauf der Vertiefung 28, in welcher die Rastkugeln 8 bzw. Rastelemente 6 bei ausgebildeter lösbarer Fixierung des Stecknippels 5 am Ventilkörper 3 aufgenommen sind, wird in der perspektivischen Ansicht des Stecknippels 5 nach Figur 6 nochmals deutlich.

Figur 7 zeigt einen schematischen Längsschnitt durch eine Ausführungsform eines weiteren Stecknippels 70, wie er als Bestandteil in diversen Ausführungsformen eines Kupplungssystems 1 vorgesehen sein kann. Auch der weitere Stecknippel 70 umfasst eine radial um die Längsachse der weiteren Stecknippels 70 verlaufende Vertiefung 78, in welcher Rastelemente 6 bzw. Rastkugeln 8 angeordnet sind, wenn der weitere Stecknippel 70 in den Ventilkörper 3 eingesteckt ist. Soll anstelle des bereits in den Figuren 5 bis 6 dargestellten Stecknippels 5 der weitere Stecknippel 70 in den Ventilkörper 3 eingesteckt werden. Es ist hierbei denkbar, dass bei Einstecken des weiteren Stecknippels 70 in den Ventilkörper 3 der Einsatz 60 weiterhin in der Aufnahme 34 angeordnet ist. Auch kann es sein, dass sich bei Einstecken des weiteren Stecknippels 70 in den Ventilkörper 3 kein Einsatz 60 in der Aufnahme 34 befindet bzw. dass der Einsatz 60 aus der Aufnahme 34 vorhergehend entnommen wurde.

Aus einer Zusammenschau der Figur 7 mit den Figuren 4 bis 6 wird deutlich, dass der weitere Stecknippel 70 sich von dem in den Figuren 4 bis 6 dargestellten Stecknippel 5 insbesondere darin unterscheidet, dass der weitere Stecknippel 70 keinen Ventilmechanismus besitzt. Hingegen besitzt der weitere Stecknippel 70 eine freie Durchgangsbohrung 72, welche kontinuierlich geöffnet ist und nicht verschlossen werden kann.

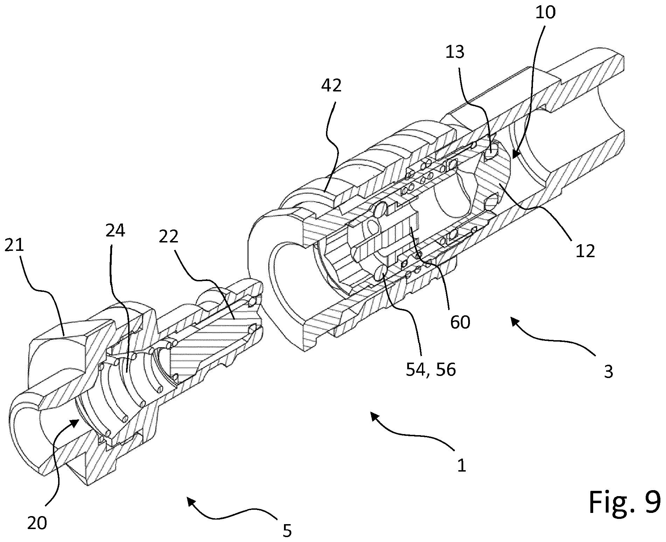

Figur 8 zeigt einen schematischen Längsschnitt durch eine Ausführungsform eines Kupplungssystems 1, wobei der Stecknippel 5 in Figur 8 vom Ventilkörper 3 getrennt ist. Die Ausführungsform des Stecknippels 5 entspricht der Ausführungsform aus den Figuren 5 und 6 und die Ausführungsform des Ventilkörpers 3 entspricht der Ausführungsform aus den Figuren 1 bis 4, so dass auf die vorherige Beschreibung rückverwiesen werden kann. Figuren 8 und 9 lassen jeweils erkennen, dass vor einem Einstecken des Stecknippels 5 in den Ventilkörper 3 der Stecknippel 5 und der Ventilkörper 3 fluchtend zueinander ausgerichtet werden. Ausgehend von der Position entsprechend Figuren 8 und 9 werden der Stecknippel 5 und der Ventilkörper 3 in axialer Richtung relativ zueinander bewegt, so dass der Stecknippel 5 in den Ventilkörper 3 eintritt und über die in den Figuren 1 und 2 jeweils gezeigten und als Rastkugeln 8 ausgebildeten Rastelemente 6 am Ventilkörper 3 festgesetzt wird.

Das mit dem Einstecken des Stecknippels 5 in den Ventilkörper 3 zwangsweise einhergehende Öffnen des ersten Ventilmechanismus 10 und des zweiten Ventilmechanismus 20 wird insbesondere aus einer Zusammenschau der Figuren 8 und 10 deutlich. Diese Zusammenschau lässt erkennen, dass bei Einstecken des Stecknippels 5 in den Ventilkörper 3 der als Stift 64 ausgebildete Vorsprung 62 mit dem Verschlussteil 22 in Anlage gelangt und das Verschlussteil 22 gegen eine Rückstellkraft der Feder 24 relativ zum Gehäuse 21 des zweiten Ventilmechanismus 20 bewegt. Hierdurch verliert das Verschlussteil 22 seinen vor dem Einstecken ausgebildeten Oberflächenkontakt zu einer Innenmantelfläche des Gehäuses 21, so dass der zweite Ventilmechanismus 20 entsprechend Figuren 10 und 11 geöffnet ist.

Weiter ist zu erkennen, dass die Ventilhülse 14 des ersten Ventilmechanismus 10 bei Einstecken des Stecknippels 5 über den Stecknippel 5 aus der geschlossenen Position nach Figur 8 in die geöffnete Position nach Figur 10 geschoben wird. Der in Figur 8 noch mit dem Gehäuse 16 dichtend in Anlage stehende O-Ring 13, welcher von der Ventilhülse 14 getragen wird, verliert bei Einstecken des Stecknippels 5 in den Ventilkörper 3 seinen Oberflächenkontakt zum Gehäuse 16, so dass der erste Ventilmechanismus 10 geöffnet ist und Fluid durch den Ventilkörper 3 strömen kann. Mit dem Verschieben der Ventilhülse 14 über den Stecknippel 5 wird zudem die Feder 11 komprimiert, welche mit dem Gehäuse 16 und der Ventilhülse 14 in Verbindung steht.

Wird nun bei in den Ventilkörper 3 eingestecktem Stecknippel 5 gemäß Figuren 10 und 11 die Verriegelungshülse 42 betätigt bzw. in axialer Richtung relativ zum Gehäuse 16 verschoben, so wird hierdurch eine Fixierung des Stecknippels 5 am Ventilkörper 3 aufgehoben. Über die Rückstellkraft der Feder 24 des zweiten Ventilmechanismus 20 und die Rückstellkraft der Feder 11 des ersten Ventilmechanismus 10 wird der Stecknippel 5 hierbei selbständig aus dem Ventilkörper 3 bewegt. Weiter wird über die Rückstellkraft der Feder 24 des zweiten Ventilmechanismus 20 das Verschlussteil 22 relativ zum Gehäuse 21 des Stecknippels 5 bewegt, so dass der vom Verschlussteil 22 getragene O-Ring 26 (vgl. Figuren 5 und 6) mit einer Innenmantelfläche des Gehäuses 21 in Anlage tritt und einen Durchfluss für Fluid durch den Stecknippel 5 blockiert.

Über die Rückstellkraft der Feder 11 des ersten Ventilmechanismus 10 wird zeitgleich oder zumindest näherungsweise zeitgleich die Ventilhülse 14 relativ zum Gehäuse 16 in die Position nach Figuren 8 und 9 zurückbewegt, so dass der von der Ventilhülse 14 getragene O-Ring 13 mit einer Innenmantelfläche des Gehäuses 16 in Anlage tritt und einen Durchfluss für Fluid durch den Ventilkörper 3 blockiert. Der erste Ventilmechanismus 10 und der zweite Ventilmechanismus 20 können bei Trennen des Stecknippels 5 vom Ventilkörper 3 daher zeitgleich oder zumindest näherungsweise zeitgleich schließen. Nach Trennen des Stecknippels 5 vom Ventilkörper 3 ist der Einsatz 60 weiterhin in der Aufnahme 34 angeordnet und kann nach vorheriger Entnahme des als O-Ring 56 ausgebildeten Fixierungsmittels 54 aus dem Ventilkörper 3 bzw. aus der Ventilhülse 14 entfernt werden.

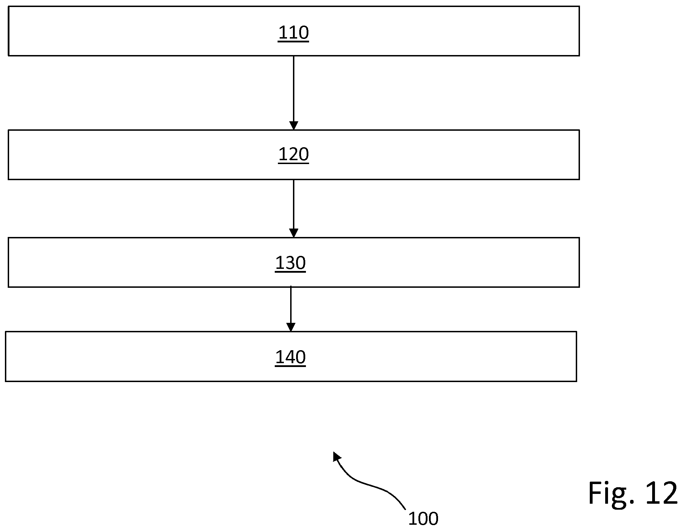

Figur 12 zeigt im Flussdiagramm einzelne Schritte, wie sie bei diversen Ausführungsformen des erfindungsgemäßen Verfahrens 100 einzeln oder in der gemäß Figur 12 dargestellten Kombination vorgesehen sein können. Das Verfahren 100 kann mit einem Kupplungssystem 1 gemäß der vorherig zu den Figuren 8 bis 11 beschriebenen Ausführungsform umgesetzt bzw. durchgeführt werden.

So wird im Rahmen eines auf Verweis mit Ziffer 110 dargestellten ersten Schrittes ein Einsatz 60 in eine Aufnahme 34 eines Ventilkörpers 3 eingesetzt. Im Schritt 120 wird der in die Aufnahme 34 des Ventilkörpers 3 eingesetzte Einsatz 60 über ein Fixierungsmittel 54, welches als O-Ring 56 ausgebildet ist, festgesetzt. Im Schritt 130 wird der Stecknippel 5 in den Ventilkörper 3 eingesteckt, wodurch ein als Bestandteil des Ventilkörpers 3 ausgebildeter erster Ventilmechanismus 10 über den Stecknippel 5 geöffnet wird und zudem ein als Bestandteil des Stecknippels 5 ausgebildeter zweiter Ventilmechanismus 20 über den in die Aufnahme 34 des Ventilkörpers 3 eingesetzten Einsatz 60, welcher über das Fixierungsmittel 54 festgesetzt ist, geöffnet wird. Im Schritt 140 wird der Stecknippel 5 vom Ventilkörper 3 getrennt, wobei der erste Ventilmechanismus 10 des Ventilkörpers 3 und der zweite Ventilmechanismus 20 des Stecknippels 5 jeweils selbständig schließen.

Die Erfindung wurde unter Bezugnahme auf eine bevorzugte Ausführungsform beschrieben. Es ist jedoch für einen Fachmann vorstellbar, dass Abwandlungen oder Änderungen der Erfindung gemacht werden können, ohne dabei den Schutzbereich der nachstehenden Ansprüche zu verlassen.

### Bezugszeichenliste

- 1: Kupplungssystem
- 3: Ventilkörper
- 5: Stecknippel
- 6: Rastelement
- 8: Rastkugel
- 10: Erster Ventilmechanismus
- 11: Feder
- 12: Verschluss
- 13: O-Ring
- 14: Ventilhülse
- 15: Durchbruch
- 16: Gehäuse
- 18: Anschlussstück
- 20: Zweiter Ventilmechanismus
- 21: Gehäuse
- 22: Verschlussteil
- 24: Feder
- 26: O-Ring
- 27: Einkerbung
- 28: Vertiefung
- 32: Sitz
- 34: Aufnahme
- 42: Verriegelungshülse
- 43: Feder
- 54: Fixierungsmittel
- 56: O-Ring
- 60: Einsatz
- 62: Vorsprung
- 64: Stift
- 66: Schulter
- 67: Anschlag
- 68: Bohrung
- 70: Weiterer Stecknippel
- 72: Freie Durchgangsbohrung
- 100: Verfahren
- 110: Erster Verfahrensschritt
- 120: Zweiter Verfahrensschritt
- 130: Dritter Verfahrensschritt
- 140: Vierter Verfahrensschritt

## Patentansprüche

1. Kupplungssystem (1) für Schlauch- und/oder Rohrleitungen, umfassend
- einen Stecknippel (5) und
- einen Ventilkörper (3), in welchen der Stecknippel (5) mit einer hiermit einhergehenden lösbaren Fixierung über den Ventilkörper (3) eingesteckt werden kann, wobei
a) der Ventilkörper (3) einen ersten Ventilmechanismus (10) besitzt, der mittels eines Einsteckens des Stecknippels (5) in den Ventilkörper (3) über den Stecknippel (5) geöffnet wird und bei einem Trennen des Stecknippels (5) vom Ventilkörper (3) selbständig schließt und wobei
b) der Stecknippel (5) einen zweiten Ventilmechanismus (20) besitzt, wobei
- das Kupplungssystem (1) mindestens einen Einsatz (60) umfasst, wobei der erste Ventilmechanismus (10) des Ventilkörpers (3) und der mindestens eine Einsatz (60) als zwei voneinander trennbare Komponenten des Ventilkörpers (3) ausgebildet sind und welcher mindestens eine Einsatz (60)
- entnehmbar in einer durch den Ventilkörper (3) ausgebildeten Aufnahme (34) angeordnet werden kann und entnehmbar angeordnet in der durch den Ventilkörper (3) ausgebildeten Aufnahme (34) bei Einstecken des Stecknippels (5) in den Ventilkörper (3) zum selbständigen Öffnen des zweiten Ventilmechanismus (20) ausgebildet ist, welcher zweite Ventilmechanismus (20) Bestandteil des Stecknippels (5) ist.

2. Kupplungssystem nach Anspruch 1, bei welchem der zweite Ventilmechanismus (20) des Stecknippels (5) ein Verschlussteil (22) und eine an das Verschlussteil (22) mechanisch gekoppelte Feder (24) umfasst, wobei
- das Verschlussteil (22) mittels eines Einsteckens des Stecknippels (5) vom mindestens einen Einsatz (60), welcher entnehmbar in der durch den Ventilkörper (3) ausgebildeten Aufnahme (34) angeordnet ist, gegen eine Rückstellkraft der Feder (24) in eine geöffnete Position überführbar ist und bei einem Trennen des Stecknippels (5) vom Ventilkörper (3) über die Rückstellkraft der Feder (24) selbständig in eine geschlossene Position überführbar ist.

3. Kupplungssystem nach Anspruch 2, bei welchem dem Verschlussteil (22) ein O-Ring (26) zugeordnet ist, welcher O-Ring (26) das Verschlussteil (22) in der geschlossenen Position gegenüber einer Innenmantelfläche des Stecknippels (5) fluidisch abdichtet.

4. Kupplungssystem nach einem der Ansprüche 1 bis 3, bei welchem der Ventilkörper (3) wenigstens ein Fixierungsmittel (54) umfasst, welches wenigstens eine Fixierungsmittel (54) lösbar in einen durch den Ventilkörper (3) ausgebildeten Sitz (32) eingebracht werden kann und mit dem mindestens einen Einsatz (60) derart zusammenwirkt, dass
- der mindestens eine Einsatz (60) über das wenigstens eine Fixierungsmittel (54) in der über den Ventilkörper (3) ausgebildeten Aufnahme (34) gehalten wird, wenn das wenigstens eine Fixierungsmittel (54) in den durch den Ventilkörper (3) ausgebildeten Sitz (32) eingebracht ist und wobei
- der mindestens eine Einsatz (60) aus der über den Ventilkörper (3) ausgebildeten Aufnahme (34) entnommen werden kann, wenn das wenigstens eine Fixierungsmittel (54) aus dem durch den Ventilkörper (3) ausgebildeten Sitz (32) entfernt ist.

5. Kupplungssystem nach Anspruch 4, bei welchem das wenigstens eine Fixierungsmittel (54) durch wenigstens einen O-Ring (56) ausgebildet ist, welcher lösbar eingebracht in den durch den Ventilkörper (3) ausgebildeten Sitz (32) fluidisch dichtend an dem in der Aufnahme (34) des Ventilkörpers (3) gehaltenen mindestens einen Einsatz (60) anliegt.

6. Kupplungssystem nach Anspruch 5, bei welchem
- der erste Ventilmechanismus (10) eine Ventilhülse (14) umfasst, welche zum Öffnen und Schließen des ersten Ventilmechanismus (10) relativ zu einem Gehäuse (16) des Ventilkörpers (3) bewegt werden kann und wobei vorgesehen ist, dass
- die Aufnahme (34) sowie der Sitz (32) durch die Ventilhülse (14) derart ausgebildet werden, dass das wenigstens eine lösbar in den Sitz (32) eingebrachte Fixierungsmittel (54), welches durch wenigstens einen O-Ring (56) ausgebildet ist, den in der Aufnahme (34) der Ventilhülse (14) gehaltenen mindestens einen Einsatz (60) gegenüber einer Innenmantelfläche der Ventilhülse (14) fluidisch abdichtet.

7. Kupplungssystem nach einem der Ansprüche 2 bis 6, bei welchem der mindestens eine entnehmbar in der durch den Ventilkörper (3) ausgebildeten Aufnahme (34) angeordnete Einsatz (60) einen vorzugsweise als Stift (64) ausgebildeten Vorsprung (62) umfasst, welcher mittels eines Einsteckens des Stecknippels (5) mit dem Verschlussteil (22) in Oberflächenkontakt treten und das Verschlussteil (22) unter Oberflächenkontakt kraftbeaufschlagt gegen die Rückstellkraft der Feder (24) des zweiten Ventilmechanismus (20) in die geöffnete Position überführen kann.

8. Kupplungssystem nach einem der Ansprüche 1 bis 7, umfassend einen weiteren Stecknippel (70), wobei der weitere Stecknippel (70) anstelle des Stecknippels (5) mit einer hiermit einhergehenden lösbaren Fixierung in den Ventilkörper (3) einsteckbar ist, wobei
- der weitere Stecknippel (70) zum Öffnen des ersten Ventilmechanismus (10) mittels eines Einsteckens des weiteren Stecknippels (70) in den Ventilkörper (3) ausgebildet ist und wobei
- der weitere Stecknippel (70) eine sich durch den weiteren Stecknippel (70) erstreckende freie Durchgangsbohrung (72) besitzt, welche sowohl bei einer zwischen dem Ventilkörper (3) und dem weiteren Stecknippel (5) ausgebildeten lösbaren Fixierung als auch bei vom Ventilkörper (3) getrenntem weiteren Stecknippel (70) jeweils geöffnet ist.

9. Verfahren (100) zum Herstellen und Sperren eines fluidischen Durchflusses, das Verfahren umfassend folgende Schritte:
- Einstecken eines Stecknippels (5) in einen Ventilkörper (3), wobei mittels des Einsteckens
a) der Stecknippel (5) lösbar am Ventilkörper (3) festgesetzt wird und
b) ein als Bestandteil des Ventilkörpers (3) ausgebildeter erster Ventilmechanismus (10) über den Stecknippel (5) geöffnet wird und
- Trennen des bis dahin lösbar am Ventilkörper (3) festgesetzten Stecknippels (5) vom Ventilkörper (3), wobei über das Trennen des Stecknippels (5) vom Ventilkörper (3) der erste Ventilmechanismus (10) selbständig schließt, wobei
- mindestens ein Einsatz (60) vorgesehen ist, wobei der erste Ventilmechanismus (10) des Ventilkörpers (3) und der mindestens eine Einsatz (60) als zwei voneinander trennbare Komponenten des Ventilkörpers (3) ausgebildet sind und wobei
- zeitlich vor Einstecken des Stecknippels (5) in den Ventilkörper (3) der mindestens eine Einsatz (60) in eine durch den Ventilkörper (3) ausgebildete Aufnahme (34) eingesetzt wird,
- welcher mindestens eine Einsatz (60) eingesetzt in die durch den Ventilkörper (3) ausgebildete Aufnahme (34) mittels des Einsteckens des Stecknippels (5) in den Ventilkörper (3) einen als Bestandteils des Stecknippels (5) ausgebildeten zweiten Ventilmechanismus (20) selbständig öffnet.

10. Verfahren nach Anspruch 9, bei welchem der zweite Ventilmechanismus (20) eine Feder (24) und ein Verschlussteil (22) umfasst, wobei
- mittels des Einsteckens des Stecknippels (5) in den Ventilkörper (3) das Verschlussteil (22) mit dem in die Aufnahme (34) eingesetzten mindestens einen Einsatz (60) in Oberflächenkontakt tritt und unter Oberflächenkontakt mit dem in die Aufnahme (34) eingesetzten mindestens einen Einsatz (60) gegen eine Rückstellkraft der Feder (24) in eine geöffnete Position überführt wird, womit einhergehend ein Durchfluss für Fluid durch den Stecknippel (5) freigegeben wird und wobei
- die Feder (24) bei Trennen des Stecknippels (5) vom Ventilkörper (3) das Verschlussteil (22) in eine geschlossene Position überführt, womit einhergehend ein Durchfluss für Fluid durch den Stecknippel (5) gesperrt wird.

11. Verfahren nach Anspruch 10, bei welchem der mindestens eine Einsatz (60) einen vorzugsweise als Stift (64) ausgebildeten Vorsprung (62) umfasst, welcher bei Einstecken des Stecknippel (5) in den Ventilkörper (3) mit dem Verschlussteil (22) in Oberflächenkontakt tritt und das Verschlussteil (22) unter Oberflächenkontakt kraftbeaufschlagt gegen die Rückstellkraft der Feder (24) in die geöffnete Position überführt.

12. Verfahren nach einem der Ansprüche 9 bis 11, bei welchem zeitlich nach Öffnen des zweiten Ventilmechanismus (20) über den in die Aufnahme (34) eingesetzten mindestens einen Einsatz (60)
- der bis dahin lösbar am Ventilkörper (3) festgesetzte Stecknippel (5) vom Ventilkörper (3) getrennt wird und zeitlich hierauf folgend
- der in die Aufnahme (34) eingesetzte mindestens eine Einsatz (60) aus der Aufnahme (34) entnommen wird und zeitlich hierauf folgend
- ein weiterer Stecknippel (70), der eine kontinuierlich geöffnete Durchgangsbohrung (72) besitzt, in den Ventilkörper (3) eingesteckt wird, wobei mittels des Einsteckens der weitere Stecknippel (70) lösbar am Ventilkörper (3) festgesetzt wird und der als Bestandteil des Ventilkörpers (3) ausgebildete erste Ventilmechanismus (10) über den weiteren Stecknippel (70) geöffnet wird.

13. Verfahren nach einem der Ansprüche 9 bis 12, bei welchem
- zeitlich auf das Einsetzen des mindestens einen Einsatzes (60) in die durch den Ventilkörper (3) ausgebildete Aufnahme (34) folgend
- wenigstens ein Fixierungsmittel (54) lösbar in einen durch den Ventilkörper (3) ausgebildeten Sitz (32) eingebracht wird, woraus resultierend der mindestens eine in die Aufnahme (34) eingesetzte mindestens eine Einsatz (60) über das wenigstens eine Fixierungsmittel (54) in der Aufnahme (34) gehalten wird, wobei zeitlich hierauf folgend
- der Stecknippel (5) in den Ventilkörper (3) eingesteckt wird, wobei der zweite Ventilmechanismus (20) über den in die Aufnahme (34) eingesetzten und über das wenigstens eine Fixierungsmittel (54) gehaltenen mindestens einen Einsatz (60) geöffnet wird.

14. Verfahren nach Anspruch 13, bei welchem zeitlich nach Öffnen des zweiten Ventilmechanismus (20) über den in die Aufnahme (34) eingesetzten und über das wenigstens eine Fixierungsmittel (54) gehaltenen mindestens einen Einsatz (60)
- der bis dahin lösbar am Ventilkörper (3) festgesetzte Stecknippel (5) vom Ventilkörper (3) getrennt wird und zeitlich hierauf folgend
- das wenigstens eine lösbar in dem durch den Ventilkörper (3) ausgebildeten Sitz (32) eingebrachte wenigstens eine Fixierungsmittel (54) aus dem Ventilkörper (3) entnommen wird und zeitlich hierauf folgend
- der in die Aufnahme (34) eingesetzte mindestens eine Einsatz (60) aus der Aufnahme (34) entnommen wird und zeitlich hierauf folgend
- das wenigstens eine Fixierungsmittel (54) erneut lösbar in den Sitz (32), welcher durch den Ventilkörper (3) ausgebildet wird, eingebracht wird sowie zeitlich hierauf folgend
- ein weiterer Stecknippel (70), der eine kontinuierlich geöffnete Durchgangsbohrung (72) besitzt, in den Ventilkörper (3) eingesteckt wird, wobei mittels des Einsteckens der weitere Stecknippel (70) lösbar am Ventilkörper (3) festgesetzt wird und der als Bestandteil des Ventilkörpers (3) ausgebildete erste Ventilmechanismus (10) über den weiteren Stecknippel (70) geöffnet.

15. Verfahren nach Anspruch 13 oder Anspruch 14, bei welchem das wenigstens eine Fixierungsmittel (54) durch wenigstens einen O-Ring (56) ausgebildet ist, welcher eingebracht in den durch den Ventilkörper (3) ausgebildeten Sitz (32) fluidisch dichtend an dem mindestens einen in die Aufnahme (34) eingesetzten Einsatz (60) anliegt.

16. Verfahren nach Anspruch 15, bei welchem das durch wenigstens einen O-Ring (56) ausgebildete wenigstens eine Fixierungsmittel (54) in einen Sitz (32) eingebracht wird, welchen eine Ventilhülse (14) des ersten Ventilmechanismus (10) ausbildet und eingebracht in den durch die Ventilhülse (14) ausgebildeten Sitz (32) den mindestens einen in die Aufnahme (34) eingesetzten Einsatz (60) gegenüber einer Innenmantelfläche der Ventilhülse (14) fluidisch abdichtet.

## Claims

1. A coupling system (1) for hose lines and/or pipelines, comprising
- a plug nipple (5) and
- a valve body (3), into which the plug nipple (5) can be inserted with an accompanying detachable fastening via the valve body (3); wherein
a) the valve body (3) has a first valve mechanism (10), which is opened via the plug nipple (5) by means of the plug nipple (5) being inserted into the valve body (3), and which closes independently when the plug nipple (5) is separated from the valve body (3); and wherein
b) the plug nipple (5) has a second valve mechanism (20); wherein
- the coupling system (1) comprises at least one insert (60), wherein the first valve mechanism (10) of the valve body (3) and the at least one insert (60) are designed as two components of the valve body (3) that are separable from one another; and which at least one insert (60)
- can be removably arranged in a receptacle (34) formed by the valve body (3), and which insert (60), when removably arranged in the receptacle (34) formed by the valve body (3), is designed to independently open the second valve mechanism (20) when the plug nipple (5) is inserted into the valve body (3), which second valve mechanism (20) is part of the plug nipple (5).

2. The coupling system according to claim 1, in which the second valve mechanism (20) of the plug nipple (5) comprises a closure part (22) and a spring (24) mechanically coupled to the closure part (22), wherein,
- by means of the plug nipple (5) being inserted, the closure part (22) is transferable into an open position against a restoring force of the spring (24) by the at least one insert (60), which is removably arranged in the receptacle (34) formed by the valve body (3), and the closure part (22) is independently transferable into a closed position by the restoring force of the spring (24) when the plug nipple (5) is separated from the valve body (3).

3. The coupling system according to claim 2, in which an O-ring (26) is assigned to the closure part (22), which O-ring (26) fluidically seals off the closure part (22) in the closed position from an inner lateral surface of the plug nipple (5).

4. The coupling system according to one of the claims 1 to 3, in which the valve body (3) comprises at least one fastening means (54), which at least one fastening means (54) can be introduced in a detachable manner into a seat (32) formed by the valve body (3), and which fastening means (54) interacts with the at least one insert (60) in such a manner that
- the at least one insert (60) is held by the at least one fastening means (54) in the receptacle (34) formed by the valve body (3) when the at least one fastening means (54) is introduced in the seat (32) formed by the valve body (3); and wherein
- the at least one insert (60) can be removed from the receptacle (34) formed by the valve body (3) when the at least one fastening means (54) is removed from the seat (32) formed by the valve body (3).

5. The coupling system according to claim 4, in which the at least one fastening means (54) is formed by at least one O-ring (56), which, when introduced in a detachable manner in the seat (32) formed by the valve body (3), abuts in a fluidically sealing manner on the at least one insert (60), which is being held in the receptacle (34) of the valve body (3).

6. The coupling system according to claim 5, in which
- the first valve mechanism (10) comprises a valve sleeve (14), which can be moved relative to a housing (16) of the valve body (3) in order to open and close the first valve mechanism (10); and wherein it is provided that
- the receptacle (34) as well as the seat (32) are formed by the valve sleeve (14) in such a manner that the at least one fastening means (54) introduced in a detachable manner in the seat (32), which fastening means (54) is formed by at least one O-ring (56), fluidically seals off the at least one insert (60), which is being held in the receptacle (34) of the valve sleeve (14), from an inner lateral surface of the valve sleeve (14).

7. The coupling system according to one of the claims 2 to 6, in which the at least one insert (60), which is removably arranged in the receptacle (34) formed by the valve body (3), comprises a projection (62) preferably formed as a pin (64), which pin (64), by means of the plug nipple (5) being inserted, can come into surface contact with the closure part (22) and can transfer the closure part (22) under surface contact in a force-loaded manner into the open position against a restoring force of the spring (24) of the second valve mechanism (20).

8. The coupling system according to one of the claims 1 to 7, comprising a further plug nipple (70), wherein the further plug nipple (70) is insertable with an accompanying detachable fastening into the valve body (3) instead of the plug nipple (5), wherein
- the further plug nipple (70) is designed to open the first valve mechanism (10) by means of the further plug nipple (70) being inserted into the valve body (3); and wherein
- the further plug nipple (70) has a free through hole (72) extending through the further plug nipple (70), which through hole (72) is in each case open, both with a detachable fastening formed between the valve body (3) and the further plug nipple (70) and with the further plug nipple (70) being separated from the valve body (3).

9. A method (100) for producing and shutting off a fluidic flow, the method comprising the following steps:
- inserting a plug nipple (5) into a valve body (3), wherein, by means of the plug nipple (5) being inserted,
a) the plug nipple (5) is detachably fastened to the valve body (3); and
b) a first valve mechanism (10), which is designed as a part of the valve body (3), is opened via the plug nipple (5); and
- separating the plug nipple (5) from the valve body (3), the plug nipple (5) up to then having been detachably fastened to the valve body (3), wherein the first valve mechanism (10) independently closes by the plug nipple (5) being separated from the valve body (3); wherein
- at least one insert (60) is provided, wherein the first valve mechanism (10) of the valve body (3) and the at least one insert (60) are designed as two components of the valve body (3) that are separable from one another; and wherein,
- temporally before the plug nipple (5) is inserted into the valve body (3), the at least one insert (60) is inserted into a receptacle (34) formed by the valve body (3),
- which at least one insert (60), when inserted in the receptacle (34) formed by the valve body (3), independently opens a second valve mechanism (20), which is formed as a part of the plug nipple (5), by means of the plug nipple (5) being inserted into the valve body (3).

10. The method according to claim 9, in which the second valve mechanism (20) comprises a spring (24) and a closure part (22), wherein,
- by means of the plug nipple (5) being inserted into the valve body (3), the closure part (22) comes into surface contact with the at least one insert (60), which is inserted in the receptacle (34), and the closure part (22) is transferred under surface contact with the at least one insert (60), which is inserted in the receptacle (34), into an open position against a restoring force of the spring (24), the open position being associated with a flow for a fluid through the plug nipple (5) being unblocked; and wherein
- the spring (24) transfers the closure part (22) into a closed position when the plug nipple (5) is separated from the valve body (3), the closed position being associated with a flow for a fluid through the plug nipple (5) being shut off.

11. The method according to claim 10, in which the at least one insert (60) comprises a projection (62) preferably formed as a pin (64), which pin (64) comes into surface contact with the closure part (22) when the plug nipple (5) is inserted into the valve body (3), and which pin (64) transfers the closure part (22) under surface contact in a force-loaded manner into the open position against a restoring force of the spring (24).

12. The method according to one of the claims 9 to 11, in which, temporally after the second valve mechanism (20) is opened by the at least one insert (60), which is inserted in the receptacle (34),
- the plug nipple (5), which up to then has been detachably fastened to the valve body (3), is separated from the valve body (3); and, subsequently,
- the at least one insert (60), which is inserted in the receptacle (34), is removed from the receptacle (34); and, subsequently,
- a further plug nipple (70), which has a continuously open through hole (72), is inserted into the valve body (3), wherein the further plug nipple (70) is detachably fastened to the valve body (3) by means of the further plug nipple (70) being inserted, and the first valve mechanism (10), which is designed as a part of the valve body (3), is opened via the further plug nipple (70).

13. The method according to one of the claims 9 to 12, in which,
- temporally after the at least one insert (60) has been inserted into the receptacle (34) formed by the valve body (3),
- at least one fastening means (54) is introduced in a detachable manner into a seat (32) formed by the valve body (3), with the result that the at least one insert (60), which is inserted in the receptacle (34), is held in the receptacle (34) via the at least one fastening means (54); wherein, subsequently,
- the plug nipple (5) is inserted into the valve body (3), wherein the second valve mechanism (20) is opened via the at least one insert (60), which is inserted in the receptacle (34) and being held by the at least one fastening means (54).

14. The method according to claim 13, in which, temporally after the second valve mechanism (20) has been opened via the at least one insert (60) inserted in the receptacle (34) and being held by the at least one fastening means (54),
- the plug nipple (5), which up to then has been detachably fastened to the valve body (3), is separated from the valve body (3); and, subsequently,
- the at least one fastening means (54), which has been introduced in a detachable manner into the seat (32) formed by the valve body (3), is removed from the valve body (3); and, subsequently,
- the at least one insert (60), which is inserted in the receptacle (34), is removed from the receptacle (34); and, subsequently,
- the at least one fastening means (54) is again introduced in a detachable manner into the seat (32) formed by the valve body (3); and, subsequently,
- a further plug nipple (70), which has a continuously open through hole (72), is inserted into the valve body (3), wherein the further plug nipple (70) is detachably fastened to the valve body (3) by means of the plug nipple (70) being inserted, and the first valve mechanism (10), which is designed as a part of the valve body (3), is opened via the further plug nipple (70).

15. The method according to claim 13 or claim 14, in which the at least one fastening means (54) is formed by at least one O-ring (56), which, when introduced in a detachable manner in the seat (32) formed by the valve body (3), abuts in a fluidically sealing manner on the at least one insert (60), which is inserted in the receptacle (34).

16. The method according to claim 15, in which the at least one fastening means (54) formed by at least one O-ring (56) is introduced into a seat (32), which seat (32) is formed by a valve sleeve (14) of the first valve mechanism (10), and the fastening means (54), having been introduced in the seat (32) formed by the valve sleeve (14), fluidically seals off the at least one insert (60), which is inserted in the receptacle (34), from an inner lateral surface of the valve sleeve (14).

## Revendications

1. Système d'accouplement (1) pour des tuyauteries flexibles et/ou tuyauteries rigides, comprenant
- un embout mâle (5) et
- un corps de soupape (3) dans lequel ledit embout mâle (5) peut être introduit avec une fixation amovible concomitante via le corps de soupape (3), dans lequel
a) le corps de soupape (3) présente un premier mécanisme de soupape (10) qui est ouvert par l'embout mâle (5) en introduisant ledit embout mâle (5) dans le corps de soupape (3), et se ferme automatiquement lorsque l'embout mâle (5) est séparé du corps de soupape (3), et dans lequel
b) l'embout mâle (5) présente un deuxième mécanisme de soupape (20), dans lequel
- le système d'accouplement (1) comprend au moins un insert (60), dans lequel le premier mécanisme de soupape (10) du corps de soupape (3) et ledit au moins un insert (60) sont conçus en tant que deux composants du corps de soupape (3) qui peuvent être séparés l'un de l'autre, et lequel au moins un insert (60)
- peut être disposé de manière amovible dans un logement (34) formé par le corps de soupape (3) et est conçu, disposé de façon amovible dans ledit logement (34) formé par le corps de soupape (3), pour ouvrir automatiquement le deuxième mécanisme de soupape (20) lorsque l'embout mâle (5) est inséré dans le corps de soupape (3), lequel deuxième mécanisme de soupape (20) fait partie de l'embout mâle (5).

2. Système d'accouplement selon la revendication 1, dans lequel le deuxième mécanisme de soupape (20) de l'embout mâle (5) comprend une pièce de fermeture (22) et un ressort (24) qui est couplé mécaniquement à la pièce de fermeture (22), dans lequel
- la pièce de fermeture (22) peut être transférée dans une position ouverte au moyen d'une introduction de l'embout mâle (5), par ledit au moins un insert (60) qui est agencé de manière amovible dans le logement (34) formé par le corps de soupape (3), à l'encontre d'une force de rappel du ressort (24), et peut être transféré automatiquement dans une position fermée par la force de rappel du ressort (24), lorsque l'embout mâle (5) est séparé du corps de soupape (3).

3. Système d'accouplement selon la revendication 2, dans lequel un joint torique (26) est associé à la pièce de fermeture (22), lequel joint torique (26) assure l'étanchéité fluidique de la pièce de fermeture (22) en position fermée par rapport à une surface latérale intérieure de l'embout mâle (5).

4. Système d'accouplement selon l'une quelconque des revendications 1 à 3, dans lequel le corps de soupape (3) comprend au moins un moyen de fixation (54), lequel au moins un moyen de fixation (54) peut être introduit de manière amovible dans un siège (32) formé par le corps de soupape (3) et agit de concert avec ledit au moins un insert (60) de telle manière que
- ledit au moins un insert (60) est maintenu dans le logement (34) formé par le corps de soupape (3) par l'intermédiaire dudit au moins un moyen de fixation (54), lorsque ledit au moins un moyen de fixation (54) est introduit dans le siège (32) formé par le corps de soupape (3), et dans lequel
- ledit au moins un insert (60) peut être retiré du logement (34) formé par le corps de soupape (3), lorsque ledit au moins un moyen de fixation (54) est retiré du siège (32) formé par le corps de soupape (3).

5. Système d'accouplement selon la revendication 4, dans lequel ledit au moins un moyen de fixation (54) est formé par au moins un joint torique (56) qui, introduit de manière amovible dans le siège (32) formé par le corps de soupape (3), s'applique à étanchéité fluidique contre ledit au moins un insert (60) maintenu dans le logement (34) du corps de soupape (3).

6. Système d'accouplement selon la revendication 5, dans lequel
- le premier mécanisme de soupape (10) comprend un manchon de soupape (14) qui peut être déplacé par rapport à un boîtier (16) du corps de soupape (3) afin d'ouvrir et de fermer le premier mécanisme de soupape (10), et dans lequel il est prévu que
- le logement (34) et le siège (32) sont formés par le manchon de soupape (14) de telle manière que ledit au moins un moyen de fixation (54) qui est introduit de manière amovible dans le siège (32) et qui est formé par au moins un joint torique (56) assure l'étanchéité fluidique dudit au moins un insert (60) maintenu dans le logement (34) du manchon de soupape (14), par rapport à une surface latérale intérieure du manchon de soupape (14).

7. Système d'accouplement selon l'une quelconque des revendications 2 à 6, dans lequel ledit au moins un insert (60) disposé de manière amovible dans le logement (34) formé par le corps de soupape (3) comprend une projection (62) réalisée de préférence en tant que goupille (64) qui peut entrer en contact de surface avec la pièce de fermeture (22) au moyen d'une introduction de l'embout mâle (5) et peut faire passer la pièce de fermeture (22) sous contact de surface, sollicitée par force, dans la position ouverte à l'encontre de la force de rappel du ressort (24) du deuxième mécanisme de soupape (20).

8. Système d'accouplement selon l'une quelconque des revendications 1 à 7, comprenant un autre embout mâle (70), dans lequel ledit autre embout mâle (70) peut être introduit, au lieu de l'embout mâle (5), dans le corps de soupape (3) avec une fixation amovible concomitante, dans lequel
- ledit autre embout mâle (70) est conçu pour ouvrir le premier mécanisme de soupape (10) au moyen d'une introduction de l'autre embout mâle (70) dans le corps de soupape (3), et dans lequel
- ledit autre embout mâle (70) présente un trou de passage (72) libre qui s'étend à travers l'autre embout mâle (70) et qui est respectivement ouvert aussi bien dans le cas d'une fixation amovible réalisée entre le corps de soupape (3) et l'autre embout mâle (70) que lorsque ledit autre embout mâle (70) est séparé du corps de soupape (3).

9. Procédé (100) d'établissement et de blocage d'un écoulement de fluide, le procédé comprenant les étapes suivantes consistant à:
- introduire un embout mâle (5) dans un corps de soupape (3), dans lequel, au moyen de l'introduction,
a) l'embout mâle (5) est fixé de manière amovible au corps de soupape (3) et
b) un premier mécanisme de soupape (10) conçu en tant que partie constituante du corps de soupape (3) est ouvert via l'embout mâle (5) et
- séparer l'embout mâle (5) du corps de soupape (3), qui, jusqu'à ce moment-là, a été fixé de manière amovible au corps de soupape (3), dans lequel le premier mécanisme de soupape (10) se ferme automatiquement en séparant l'embout mâle (5) du corps de soupape (3), dans lequel
- au moins un insert (60) est prévu, dans lequel le premier mécanisme de soupape (10) du corps de soupape (3) et ledit au moins un insert (60) sont conçus en tant que deux composants du corps de soupape (3) qui peuvent être séparés l'un de l'autre, et lequel
- ledit au moins un insert (60) est inséré dans un logement (34) formé par le corps de soupape (3), avant que l'embout mâle (5) soit introduit dans le corps de soupape (3),
- lequel au moins un insert (60), inséré dans le logement (34) formé par le corps de soupape (3), ouvre automatiquement un deuxième mécanisme de soupape (20) formé en tant que partie constituante de l'embout mâle (5), au moyen de l'introduction de l'embout mâle (5) dans le corps de soupape (3).

10. Procédé selon la revendication 9, dans lequel le deuxième mécanisme de soupape (20) comprend un ressort (24) et une pièce de fermeture (22), dans lequel
- en introduisant ledit embout mâle (5) dans le corps de soupape (3), la pièce de fermeture (22) entre en contact de surface avec ledit au moins un insert (60) inséré dans le logement (34) et est transférée dans une position ouverte, sous contact de surface avec ledit au moins un insert (60) inséré dans le logement (34), à l'encontre d'une force de rappel du ressort (24), ce qui s'accompagne du fait qu'un écoulement de fluide à travers l'embout mâle (5) est libéré, et dans lequel
- lorsque l'embout mâle (5) est séparé du corps de soupape (3), le ressort (24) fait passer la pièce de fermeture (22) dans une position fermée, ce qui s'accompagne du fait qu'un écoulement de fluide à travers l'embout mâle (5) est bloqué.

11. Procédé selon la revendication 10, dans lequel ledit au moins un insert (60) comprend une projection (62) conçue de préférence en tant que goupille (64) qui, lorsque l'embout mâle (5) est introduit dans le corps de soupape (3), entre en contact de surface avec la pièce de fermeture (22) et fait passer la pièce de fermeture (22) sous contact de surface, sollicitée par force, dans la position ouverte à l'encontre de la force de rappel du ressort (24).

12. Procédé selon l'une quelconque des revendications 9 à 11, dans lequel après l'ouverture du deuxième mécanisme de soupape (20) par ledit au moins un insert (60) inséré dans le logement (34),
- l'embout mâle (5) qui, jusqu'à ce moment-là, a été fixé de manière amovible au corps de soupape (3) est séparé du corps de soupape (3), et ensuite
- ledit au moins un insert (60) inséré dans le logement (34) est retiré du logement (34), et ensuite
- un autre embout mâle (70) qui présente un trou de passage (72) ouvert en continu, est introduit dans le corps de soupape (3), dans lequel, au moyen de l'introduction, ledit autre embout mâle (70) est fixé de manière amovible au corps de soupape (3) et le premier mécanisme de soupape (10) conçu en tant que partie constituante du corps de soupape (3) est ouvert par l'intermédiaire de l'embout mâle (70).

13. Procédé selon l'une quelconque des revendications 9 à 12, dans lequel,
- suite à l'insertion dudit au moins un insert (60) dans le logement (34) formé par le corps de soupape (3),
- au moins un moyen de fixation (54) est introduit de manière amovible dans un siège (32) formé par le corps de soupape (3), ce qui a pour conséquence que ledit au moins insert (60) inséré dans le logement (34) est maintenu par l'intermédiaire dudit au moins un moyen de fixation (54) dans le logement (34), dans lequel, ensuite,
- ledit embout mâle (5) est introduit dans le corps de soupape (3), dans lequel le deuxième mécanisme de soupape (20) est ouvert par l'intermédiaire dudit au moins un insert (60) inséré dans le logement (34) et maintenu par ledit au moins un moyen de fixation (54).

14. Procédé selon la revendication 13, dans lequel, après l'ouverture du deuxième mécanisme de soupape (20) par l'intermédiaire dudit au moins un insert (60) inséré dans le logement (34) et maintenu par ledit au moins un moyen de fixation (54),
- l'embout mâle (5) qui, jusqu'à ce moment-là, a été fixé de manière amovible au corps de soupape (3) est séparé du corps de soupape (3), et ensuite
- ledit au moins un moyen de fixation (54) introduit de manière amovible dans le siège (32) formé par le corps de soupape (3) est retiré du corps de soupape (3), et ensuite
- ledit au moins un insert (60) inséré dans le logement (34) est retiré du logement (34), et ensuite
- ledit au moins un moyen de fixation (54) est introduit à nouveau de manière amovible dans le siège (32) qui est formé par le corps de soupape (3), et ensuite
- un autre embout mâle (70) qui présente un trou de passage (72) ouvert en continu, est introduit dans le corps de soupape (3), dans lequel, au moyen de l'introduction, ledit autre embout mâle (70) est fixé de manière amovible au corps de soupape (3) et le premier mécanisme de soupape (10) conçu en tant que partie constituante du corps de soupape (3) est ouvert par l'intermédiaire de l'autre embout mâle (70).

15. Procédé selon la revendication 13 ou la revendication 14, dans lequel ledit au moins un moyen de fixation (54) est formé par au moins un joint torique (56) qui, introduit dans le siège (32) formé par le corps de soupape (3), s'applique à étanchéité fluidique contre ledit au moins un insert (60) inséré dans le logement (34).

16. Procédé selon la revendication 15, dans lequel ledit au moins un moyen de fixation (54) formé par au moins un joint torique (56) est introduit dans un siège (32) qui est formé par un manchon de soupape (14) du premier mécanisme de soupape (10), et, introduit dans le siège (32) formé par le manchon de soupape (14), assure l'étanchéité fluidique dudit au moins un insert (60) inséré dans le logement (34), par rapport à une surface latérale intérieure du manchon de soupape (14).
